(19) **Europäisches Patentamt European Patent Office Office européen des brevets**

(11) **EP 4 205 106 B1**

(12) **EUROPEAN PATENT SPECIFICATION**

(45) Date of publication and mention
of the grant of the patent:
**09.04.2025 Bulletin 2025/15**

(21) Application number: **21769173.2**

(22) Date of filing: **27.08.2021**

(51) International Patent Classification (IPC):
*G10L 13/033* (2013.01)   *G10L 13/047* (2013.01)
*G10L 13/08* (2013.01)   *G10L 25/30* (2013.01)

(52) Cooperative Patent Classification (CPC):
**G10L 13/08; G10L 13/033; G10L 13/047;**
G10L 25/30

(86) International application number:
**PCT/GB2021/052241**

(87) International publication number:
**WO 2022/043712 (03.03.2022 Gazette 2022/09)**

(54) **A TEXT-TO-SPEECH SYNTHESIS METHOD AND SYSTEM, AND A METHOD OF TRAINING A TEXT-TO-SPEECH SYNTHESIS SYSTEM**

VERFAHREN UND SYSTEM ZUR TEXT-ZU-SPRACHE-SYNTHESE UND VERFAHREN ZUM TRAINIEREN EINES TEXT-ZU-SPRACHE-SYNTHESESYSTEMS

PROCÉDÉ ET SYSTÈME DE SYNTHÈSE VOCALE, ET PROCÉDÉ D'APPRENTISSAGE D'UN SYSTÈME DE SYNTHÈSE VOCALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2020 GB 202013590**

(43) Date of publication of application:
**05.07.2023 Bulletin 2023/27**

(73) Proprietor: **Spotify AB**
**111 53 Stockholm (SE)**

(72) Inventors:
• **NOLASCO, Ines Almeida**
**London N22 5EB (GB)**
• **VAUGHAN, Felix**
**London N22 5EB (GB)**
• **QURESHI, Zeenat**
**London N22 5EB (GB)**
• **FLYNN, John**
**London N22 5EB (GB)**

(74) Representative: **Ström & Gulliksson AB**
**Box 5275**
**102 46 Stockholm (SE)**

(56) References cited:
**WO-A1-2020/024582   WO-A1-2020/073944**
**US-A1- 2020 082 807**

• **CHOI HEEJIN ET AL: "Emotional Speech Synthesis for Multi-Speaker Emotional Dataset Using WaveNet Vocoder", 2019 IEEE INTERNATIONAL CONFERENCE ON CONSUMER ELECTRONICS (ICCE), IEEE, 11 January 2019 (2019-01-11), pages 1 - 2, XP033528048, DOI: 10.1109/ICCE.2019.8661919**

**Description**

FIELD

Embodiments described herein relate to a text-to-speech synthesis method, a text-to-speech synthesis system, and a method of training a text-to speech system.

BACKGROUND

Text-to-speech (TTS) synthesis methods and systems are used in many applications, for example in devices for navigation and personal digital assistants. TTS synthesis methods and systems can also be used to provide speech segments that can be used in games, movies, audio books, or other media comprising speech.

There is a continuing need to improve TTS synthesis systems. In particular, there is a need to improve the quality of speech generated by TTS systems such that the speech generated is perceived by human listeners to convey a speech attribute. A speech attribute comprises emotion, intention, projection, pace, and/or accent. Speech data that has a speech attribute may sound natural, realistic and human-like. Such speech can be used in games, movies or other media comprising speech. TTS systems often comprise algorithms that need to be trained using training samples and there is a continuing need to improve the method by which the TTS system is trained such that the TTS system generates speech that conveys a speech attribute.

A text-to-speech synthesis system using several trained models having different pre-set information such as sound speed, volume, pitch, tone and rhythm is disclosed in WO 2020/024582 A1.

The invention is defined in the independent claims. Preferred embodiments are set forth in the dependent claims.

BRIEF DESCRIPTION OF FIGURES

Systems and methods in accordance with non-limiting examples will now be described with reference to the accompanying figures in which:

Figure 1 shows a schematic illustration of a text-to-speech (TTS) synthesiser for generating speech from text in accordance with an embodiment;

Figure 2 shows a schematic illustration of a prediction network that converts textual information into intermediate speech data in accordance with an embodiment;

Figure 3 (a) shows a schematic illustration of the training of the prediction network of Figure 2 in accordance with an example useful for understanding the invention;

Figure 3 (b) shows a schematic illustration of the training of a Vocoder in accordance with an embodiment;

Figure 3 (c) shows a schematic illustration of the training of a Vocoder in accordance with another embodiment;

Figure 4 shows a schematic illustration of synthesiser for generating speech from text in accordance with another embodiment;

Figure 5 (a) shows a schematic illustration of a method of training a synthesiser according to an embodiment;

Figure 5 (b) shows a schematic illustration of a method of training a synthesiser according to another embodiment;

Figure 6 shows a schematic illustration of a method of training a synthesiser according to another embodiment;

Figure 7 (a) is a schematic illustration of a method of training a synthesiser according to another embodiment;

Figure 7 (b) is a schematic illustration of a validation loss curve obtained when the synthesiser is trained according an embodiment;

Figure 7 (c) is a schematic illustration of a validation loss curve obtained when the synthesiser is trained according to an example useful for understanding the invention;

EP 4 205 106 B1

Figure 8 shows a flowchart of the steps for computing a transcription metric;

Figure 9 shows a flowchart of the steps for computing an attention score;

Figure 10 shows a flowchart of the steps for computing a robustness metric;

Figure 11 is a schematic illustration of the obtaining of sub-datasets for training a synthesiser; and

Figure 12 shows an illustration of a text-to-speech (TTS) system according to one embodiment.

DETAILED DESCRIPTION

According to a first aspect of the invention, there is provided a method of text-to-speech synthesis comprising:

receiving text;
inputting the received text in a synthesiser, wherein the synthesiser comprises a prediction network that is configured to convert the received text into speech data having a speech attribute, wherein the speech attribute comprises emotion, intention, projection, pace, and/or accent; and
outputting said speech data,
wherein the prediction network is obtained by:

obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
training a first model using the first sub-dataset until a performance metric reaches a first predetermined value;
training a second model by further training the first model using the second sub-dataset until the performance metric reaches a second predetermined value; and
selecting one of the trained models as the prediction network.

Methods in accordance with embodiments described herein provide an improvement to text-to-speech synthesis by providing a prediction network that is trained to generate speech that has a speech attribute, as perceived by human listeners. A speech attribute comprises emotion, intention, projection, pace, and/or accent. Speech data that has a speech attribute may sound natural, realistic and human-like. The disclosed methods ensure that the trained prediction network can accurately generate speech from text, the generated speech is comprehensible, and the generated speech is perceived by human listeners to have a speech attribute.
Further, the disclosed methods address a technical problem tied to computer technology and arising in the realm of text-to-speech synthesis. Namely, the disclosed method provide an improvement in a method of text-to-speech synthesis that uses a trained prediction network to generate speech that is perceived by humans to have a speech attribute. Training such models require training data that has a speech attribute. Availability of such speech data is limited. The methods overcome this limitation by a providing a method capable of training a prediction network using relatively small datasets. Further, the methods maintain the performance of the prediction network. For example, the claimed methods avoid overfitting of the trained model.
Further, the disclosed methods address a technical problem arising in the realm of text-to-speech synthesis. Namely, the disclosed methods provide an improvement in a method of text-to-speech synthesis that uses a trained prediction network to generate speech that is perceived by humans to have a speech attribute. Training such models require training data have a speech attribute that is pronounced (so that the model learns to produce speech having such patterns). Training a model directly with training data conveying a pronounced speech attribute has been found to result in models with a poor performance (as measured by a performance metric for example). Training a model sequentially such that the strength of the speech attribute of the audio samples seen by the model is gradually increased has been found to result in models with a better performance (as measured by the performance metric). The methods overcome this limitation by sequentially training a first model with a dataset, and then training a second model with another dataset, wherein the second model is trained with dataset that has a more pronounced speech attribute on average than the dataset used to train the first model.
In an embodiment, the obtaining of the prediction network further comprises refreshing the second model, wherein refreshing the second model comprises:
further training the second model using the first sub-dataset until the performance metric reaches a third predetermined value.
In an embodiment, the performance metric comprises one or more of a validation loss, a speech pattern accuracy

3

test, a mean opinion score (MOS), a MUSHRA score, a transcription metric, an attention score, and a robustness score

In an embodiment, when the performance metric is the validation loss, the first predetermined value is less than the second predetermined value.

In an embodiment, the second predetermined value is 0.6 or less.

In an embodiment, when the performance metric is the transcription metric, the second predetermined value is 1 or less.

In an embodiment, the attention score comprises an attention confidence or a coverage deviation.

In an embodiment, when the performance metric is the attention score and the attention score comprises the attention confidence, the second predetermined value is 0.1 or less.

In an embodiment, when the performance metric is the attention score and the attention score comprises the coverage deviation, the second predetermined value is 1.0 or less.

In an embodiment, when the performance metric is the robustness score, the second predetermined value is 0.1% or less.

In an embodiment, when the performance metric is the MUSHRA score, the second predetermined value is 60 or more.

In an embodiment, the obtaining of the prediction network further comprises:

> combining the first sub-dataset and the second sub-dataset into a combined dataset, wherein the combined dataset comprises audio samples and corresponding text from the first sub-dataset and the second sub-dataset;
> training the first model using the combined dataset until a performance metric reaches a first predetermined value; and
> training the second model by further training the first model using the second sub-dataset until the performance metric reaches a second predetermined value.

According to an embodiment, the obtaining of the prediction network further comprises:

> obtaining a third sub-dataset, wherein the third sub-dataset comprises audio samples and corresponding text, and the speech attribute of the audio samples of the third sub-dataset is more pronounced than the speech attribute of the audio samples of the second sub-dataset; and
> training a third model by further training the second model using the third sub-dataset.

According to a second aspect of the invention, there is provided a method of text-to-speech synthesis comprising:

> receiving text;
> inputting the received text in a synthesiser, wherein the synthesiser comprises a prediction network that is configured to convert the received text into speech data having a speech attribute, wherein the speech attribute comprises emotion, intention, projection, pace, and/or accent; and
> outputting said speech data,
> wherein the prediction network is obtained by:
>
>> obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
>> combining the first sub-dataset and the second sub-dataset into a combined dataset, wherein the combined dataset comprises audio samples and corresponding text from the first sub-dataset and the second sub-dataset;
>> training a first model using the combined dataset;
>> training a second model by further training the first model using the second sub-dataset; and
>> selecting one of the trained models as the prediction network.

In an embodiment, the obtaining of the prediction network further comprises refreshing the second model, wherein refreshing the second model comprises:
further training the second model using the combined dataset.

In an embodiment, refreshing the second model is performed until a performance metric reaches a predetermined value.

In an embodiment, refreshing the second model is performed until a performance metric reaches a predetermined value, wherein the performance metric comprises one or more of a validation loss, a speech pattern accuracy test, a mean opinion score (MOS), a MUSHRA score, a transcription metric, an attention score and a robustness score.

In an embodiment, when the performance metric is the validation loss, the predetermined value is 0.6 or less.

In an embodiment, the obtaining of the prediction network further comprises:

training the first model using the combined dataset until a performance metric reaches a first predetermined value;
training the second model by further training the first model using the second sub-dataset until the performance metric reaches a second predetermined value.

According to an embodiment, the obtaining of the prediction network further comprises:

obtaining a third sub-dataset, wherein the third sub-dataset comprises audio samples and corresponding text, and the speech attribute of the audio samples of the third sub-dataset is more pronounced than the speech attribute of the audio samples of the second sub-dataset;
combining the third sub-dataset into the combined dataset, such that the combined dataset further comprises audio samples and corresponding text from the third sub-dataset; and
training a third model by further training the second model using the third sub-dataset.

According to an embodiment, the obtaining of the prediction network further comprises refreshing the third model, wherein refreshing the third model comprises:
further training the third model using the combined dataset.

According to a third aspect of the invention, there is provided a method of training a text-to-speech synthesis system that comprises a prediction network configured to convert received text into speech data having a speech attribute, wherein the speech attribute comprises emotion, intention, projection, pace, and/or accent, the method comprising:

obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
training a first model using the first sub-dataset until a performance metric reaches a first predetermined value;
training a second model by further training the first model using the second sub-dataset until the performance metric reaches a second predetermined value; and
selecting one of the trained models as the prediction network.

According to a fourth aspect of the invention, there is provided a method of training a text-to-speech synthesis system that comprises a prediction network configured to convert received text into speech data having a speech attribute, wherein the speech attribute comprises emotion, intention, projection, pace, and/or accent, the method comprising:

obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
combining the first sub-dataset and the second sub-dataset into a combined dataset, wherein the combined dataset comprises audio samples and corresponding text from the first sub-dataset and the second sub-dataset;

training a first model using the combined dataset;
training a second model by further training the first model using the second sub-dataset; and

selecting one of the trained models as the prediction network.

In an embodiment, the second sub-dataset comprises fewer samples than the first sub-dataset.
In an embodiment, the audio samples of the first sub-dataset and the second sub-dataset are recorded by a human actor.
According to an embodiment, the audio samples of the first sub-dataset and the second sub-dataset are recorded by the same human actor.
In an embodiment, the first model is pre-trained prior to training with the first sub-dataset or the combined dataset.
In an embodiment, the first model is pre-trained using a dataset comprising audio samples from one or more human voices.
In an embodiment, the samples of the first sub-dataset and of the second sub-dataset are from the same domain, wherein the domain refers to the topic that the method is applied in.
According to a fifth aspect of the invention, there is provided a text-to-speech synthesis system comprising:

a means for receiving text;
a processor configured to input the received text in a synthesiser,
wherein the synthesiser comprises a prediction network that is configured to convert the received text into speech data having a speech attribute, wherein the speech attribute comprises emotion, intention, projection, pace, and/or accents, and

wherein the prediction network is obtained by training a prediction network according to the third and fourth embodiments; and

an output means for outputting said speech data.

According to an embodiment, the prediction network comprises a sequence-to-sequence model.

According to a sixth aspect of the invention, there is provided speech data synthesised by a method according to any preceding embodiment.

According to a seventh aspect of the invention, there is provided a carrier medium comprising computer readable code configured to cause a computer to perform the methods of any of the above embodiments.

The methods are computer-implemented methods. Since some methods in accordance with examples can be implemented by software, some examples encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

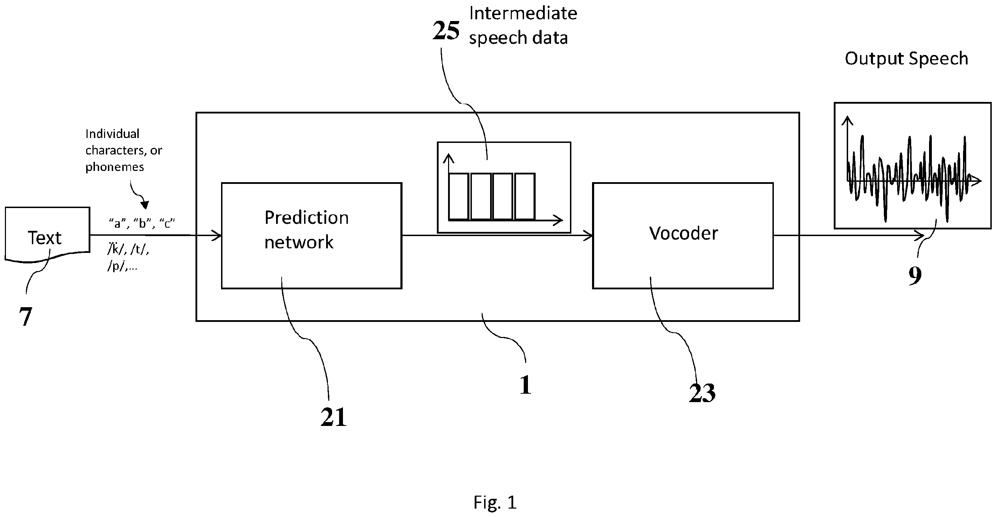

Figure 1 shows a schematic illustration of a text to speech synthesiser 1 for generating speech 9 from text 7. The synthesiser 1 can be trained to generate speech. The generated speech may have a speech attribute. A speech attribute may comprise emotions such as sadness, anger, happiness, etc... ; and/or intentions such as sarcasm; and/or a different projections such as a whisper, a shout; and/or different paces; and/or different accents such as French, British English, American English, etc... A speech attribute (also referred to as an attribute) refers to how the generated speech is perceived by a human listener.

The system comprises a prediction network 21 configured to convert input text 7 into speech data 25. The speech data 25 is also referred to as the intermediate speech data 25. The system further comprises a Vocoder that converts the intermediate speech data 25 into an output speech 9. The prediction network 21 comprises a neural network (NN). The Vocoder also comprises a NN.

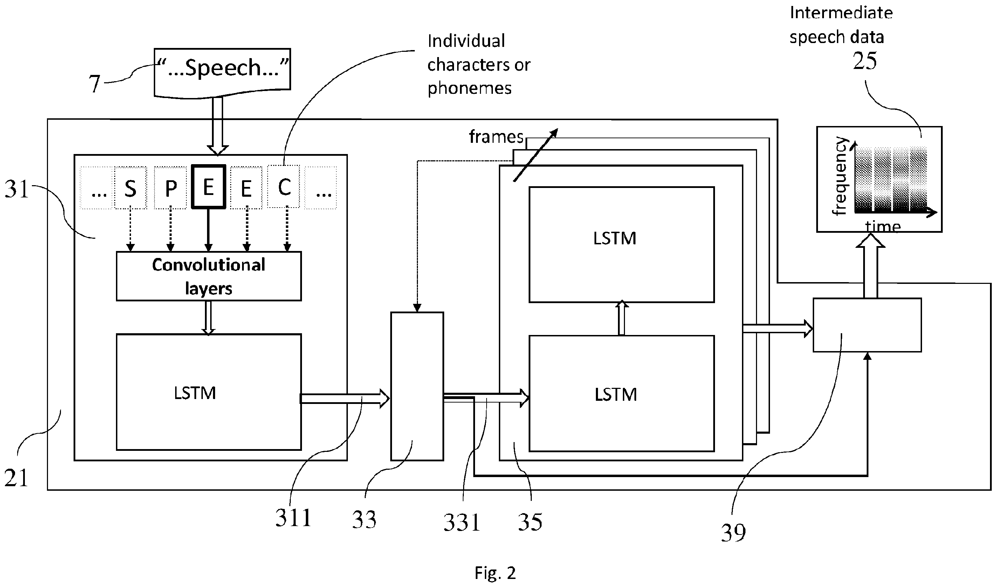

The prediction network 21 receives a text input 7 and is configured to convert the text input 7 into an intermediate speech data 25. The intermediate speech data 25 comprises information from which an audio waveform may be derived. The intermediate speech data 25 may be highly compressed while retaining sufficient information to convey vocal expressiveness. The generation of the intermediate speech data 25 will be described further below in relation to Figure 2.

The text input 7 may be in the form of a text file or any other suitable text form such as ASCII text string. The text may be in the form of single sentences or longer samples of text. A text front-end, which is not shown, converts the text sample into a sequence of individual characters (e.g. "a", "b", "c", ...). In another example, the text front-end converts the text sample into a sequence of phonemes (/k/, /t/, /p/, ...). Phonemes are units of sound that distinguish a word from another in a particular language. For example, in English, the phonemes /p/, /b/, /d/, and /t/ occur in the words pit, bit, din, and tin respectively for example.

The intermediate speech data 25 comprises data encoded in a form from which a speech sound waveform can be obtained. For example, the intermediate speech data may be a frequency domain representation of the synthesised speech. In a further example, the intermediate speech data is a spectrogram. A spectrogram may encode a magnitude of a complex number as a function of frequency and time. In a further example, the intermediate speech data 25 may be a mel spectrogram. A mel spectrogram is related to a speech sound waveform in the following manner: a short-time Fourier transform (STFT) is computed over a finite frame size, where the frame size may be 50 ms, and a suitable window function (e.g. a Hann window) may be used; and the magnitude of the STFT is converted to a mel scale by applying a non-linear transform to the frequency axis of the STFT, where the non-linear transform is, for example, a logarithmic function.

The Vocoder module takes the intermediate speech data 25 as input and is configured to convert the intermediate speech data 25 into a speech output 9. The speech output 9 is an audio file of synthesised speech and/or information that enables generation of speech. The Vocoder module will be described further below.

Alternatively, the intermediate speech data 25 is in a form from which an output speech 9 can be directly obtained. In such a system, the Vocoder 23 is optional.

Figure 2 shows a schematic illustration of the prediction network 21 according to a non-limiting example. It will be understood that other types of prediction networks that comprise neural networks (NN) could also be used.

The prediction network 21 comprises an Encoder 31, an attention network 33, and decoder 35. As shown in Figure 2, the prediction network maps a sequence of characters to intermediate speech data 25. In an alternative example which is not shown, the prediction network maps a sequence of phonemes to intermediate speech data 25. In an example, the prediction network is a sequence to sequence model. A sequence to sequence model maps a fixed length input from one domain to a fixed length output in a different domain, where the length of the input and output may differ.

The Encoder 31 takes as input the text input 7. The encoder 31 comprises a character embedding module (not shown) which is configured to convert the text input 7, which may be in the form words, sentences, paragraphs, or other forms, into a sequence of characters. Alternatively, the encoder may convert the text input into a sequence of phonemes. Each character from the sequence of characters may be represented by a learned 512-dimensional character embedding. Characters from the sequence of characters are passed through a number of convolutional layers. The number of convolutional layers may be equal to three for example. The convolutional layers model longer term context in the character input sequence. The convolutional layers each contain 512 filters and each filter has a 5x1 shape so that each filer spans 5 characters. To the outputs of each of the three convolutional layers, a batch normalization step (not shown) and a ReLU activation function (not shown) are applied. The encoder 31 is configured to convert the sequence of characters (or alternatively phonemes) into encoded features 311 which is then further processed by the attention network 33 and the decoder 35.

The output of the convolutional layers is passed to a recurrent neural network (RNN). The RNN may be a long-short term memory (LSTM) neural network (NN). Other types of RNN may also be used. According to one example, the RNN may be a single bidirectional LSTM containing 512 units (256 in each direction). The RNN is configured to generate encoded features 311. The encoded features 311 output by the RNN may be a vector with a dimension $k$.

The Attention Network 33 is configured to summarize the full encoded features 311 output by the RNN and output a fixed-length context vector 331. The fixed-length context vector 331 is used by the decoder 35 for each decoding step. The attention network 33 may take information (such as weights) from previous decoding steps (that is, from previous speech frames decoded by decoder) in order to output a fixed-length context vector 331. The function of the attention network 33 may be understood to be to act as a mask that focusses on the important features of the encoded features 311 output by the encoder 31. This allows the decoder 35, to focus on different parts of the encoded features 311 output by the encoder 31 on every step. The output of the attention network 33, the fixed-length context vector 331, may have dimension $m$, where $m$ may be less than k. According to a further example, the Attention network 33 is a location-based attention network.

Additionally or alternatively, the attention network 33 takes as input an encoded feature vector 311 denoted as $\underline{h}$ = {h1, h2,..., hk}. A(i) is a vector of attention weights (called alignment). The vector A(i) is generated from a function *attend* (s(i-1), A(i-1), $\underline{h}$), where s(i-1) is a previous decoding state and A(i-1) is a previous alignment. s(i-1) is 0 for the first iteration of first step. The *attend*() function is implemented by scoring each element in $\underline{h}$ separately and normalising the score. G(i) is computed from $G(i) = \Sigma^k A(i,k) \times h_k$. G(i) is the context vector. The output of the attention network 33 is generated as Y(i) = *generate*(s(i-1), G(i)), where *generate*() may be implemented using a recurrent layer of 256 gated recurrent units (GRU) units for example. The attention network 33 also computes a new state s(i) = *recurrency*($s(i-1)$, G(i), Y(i)), where *recurrency* () is implemented using LSTM.

The decoder 35 is an autoregressive RNN which decodes information one frame at a time. The information directed to the decoder 35 is be the fixed length context vector 331 from the attention network 33. In another example, the information directed to the decoder 35 is the fixed length context vector 331 from the attention network 33 concatenated with a prediction of the decoder 35 from the previous step. In each decoding step, that is, for each frame being decoded, the decoder may use the results from previous frames as an input to decode the current frame. In an example, as shown in Figure 2, the decoder autoregressive RNN comprises two uni-directional LSTM layers with 1024 units. The prediction from the previous time step is first passed through a small pre-net (not shown) containing 2 fully connected layers of 256 hidden ReLU units. The output of the pre-net, and the attention context vector are concatenated and then passed through the two uni-directional LSTM layers. The output of the LSTM layers is directed to a predictor 39 where it is concatenated with the fixed-length context vector 331 from the attention network 33 and projected trough a linear transform to predict a target mel spectrogram. The predicted mel spectrogram is further passed through a 5-layer convolutional post-net which predicts a residual to add to the prediction to improve the overall reconstruction. Each post-net layer is comprised of 512 filters with shape $5 \times 1$ with batch normalization, followed by tanh activations on all but the final layer. The output of the predictor 39 is the speech data 25.

The parameters of the encoder 31, decoder 35, predictor 39 and the attention weights of the attention network 33 are the trainable parameters of the prediction network 21.

According to another example, the prediction network 21 comprises an architecture according to Shen et al. "Natural tts synthesis by conditioning wavenet on mel spectrogram predictions." 2018 IEEE International Conference on Acoustics, Speech and Signal Processing (ICASSP). IEEE, 2018.

Returning to Figure 1, the Vocoder 23 is configured to take the intermediate speech data 25 from the prediction network 21 as input, and generate an output speech 9. In an example, the output of the prediction network 21, the intermediate speech data 25, is a mel spectrogram representing a prediction of the speech waveform.

According to an embodiment, the Vocoder 23 comprises a convolutional neural network (CNN). The input to the Vocoder 23 is a frame of the mel spectrogram provided by the prediction network 21 as described above in relation to Figure 1. The mel spectrogram 25 may be input directly into the Vocoder 23 where it is inputted into the CNN. The CNN of the Vocoder 23 is configured to provide a prediction of an output speech audio waveform 9. The predicted output speech audio waveform 9 is conditioned on previous samples of the mel spectrogram 25. The output speech audio waveform may have 16-bit resolution. The output speech audio waveform may have a sampling frequency of 24 kHz.

Alternatively, the Vocoder 23 comprises a convolutional neural network (CNN). The input to the Vocoder 23 is derived from a frame of the mel spectrogram provided by the prediction network 21 as described above in relation to Figure 2. The mel spectrogram 25 is converted to an intermediate speech audio waveform by performing an inverse STFT. Each sample of the speech audio waveform is directed into the Vocoder 23 where it is inputted into the CNN. The CNN of the Vocoder 23 is configured to provide a prediction of an output speech audio waveform 9. The predicted output speech audio waveform 9 is conditioned on previous samples of the intermediate speech audio waveform. The output speech audio waveform may have 16-bit resolution. The output speech audio waveform may have a sampling frequency of 24 kHz.

Additionally or alternatively, the Vocoder 23 comprises a WaveNet NN architecture such as that described in Shen et al. "Natural tts synthesis by conditioning wavenet on mel spectrogram predictions." 2018 IEEE International Conference on Acoustics, Speech and Signal Processing (ICASSP). IEEE, 2018.

Additionally or alternatively, the Vocoder 23 comprises a WaveGlow NN architecture such as that described in Prenger et al. "Waveglow: A flow-based generative network for speech synthesis." ICASSP 2019-2019 IEEE International Conference on Acoustics, Speech and Signal Processing (ICASSP). IEEE, 2019.

Alternatively, the Vocoder 23 comprises any deep learning based speech model that converts an intermediate speech data 25 into output speech 9.

According to another alternative embodiment, the Vocoder 23 is optional. Instead of a Vocoder, the prediction network 21 further comprises a conversion module (not shown) that converts intermediate speech data 25 into output speech 9. The conversion module may use an algorithm rather than relying on a trained neural network. In an example, the Griffin-Lim algorithm is used. The Griffin-Lim algorithm takes the entire (magnitude) spectrogram from the intermediate speech data 25, adds a randomly initialised phase to form a complex spectrogram, and iteratively estimates the missing phase information by: repeatedly converting the complex spectrogram to a time domain signal, converting the time domain signal back to frequency domain using STFT to obtain both magnitude and phase, and updating the complex spectrogram by using the original magnitude values and the most recent calculated phase values. The last updated complex spectrogram is converted to a time domain signal using inverse STFT to provide output speech 9.

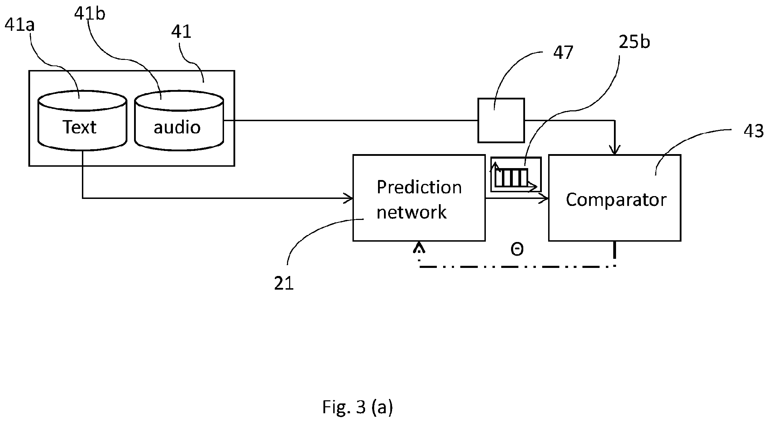

Figure 3 (a) shows a schematic illustration of a configuration for training the prediction network 21 according to a comparative example. The prediction network 21 is trained independently of the Vocoder 23. According to an example, the prediction network 21 is trained first and the Vocoder 23 is then trained independently on the outputs generated by the prediction network 21.

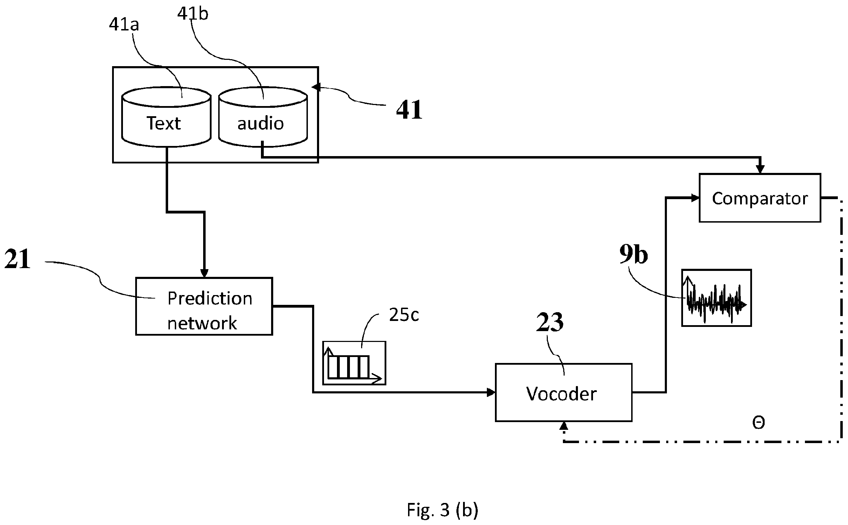

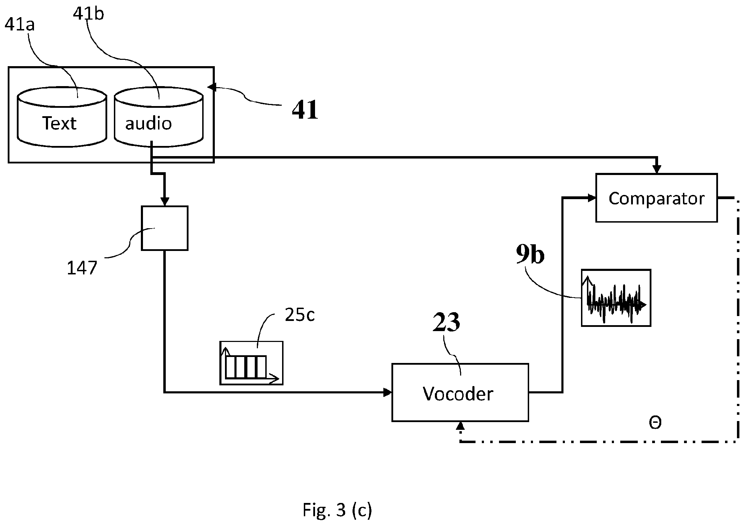

According to an example, the prediction network 21 is trained from a first training dataset 41 of text data 41a and audio data 41b pairs as shown in Figure 3 (a). The Audio data 41b comprises one or more audio samples. In this example, the training dataset 41 comprises audio samples from a single speaker. In an alternative example, the training set 41 comprises audio samples from different speakers. When the audio samples are from different speakers, the prediction network 21 comprises a speaker ID input (e.g. an integer or learned embedding), where the speaker ID inputs correspond to the audio samples from the different speakers. In the figure, solid lines (-) represent data from a training sample, and dash-dot-dot-dash (-···-) lines represent the update of the weights Θ of the neural network of the prediction network 21 after every training sample. Training text 41a in fed in to the prediction network 21 and a prediction of the intermediate speech data 25b is obtained. The corresponding audio data 41b is converted using a converter 47 into a form where it can be compared with the prediction of the intermediate speech data 25b in the comparator 43. For example, when the intermediate speech data 25b is a mel spectrogram, the converter 47 performs a STFT and a non-linear transform that converts the audio waveform into a mel spectrogram. The comparator 43 compares the predicted first speech data 25b and the converted audio data 41b. According to an example, the comparator 43 may compute a loss metric such as a cross entropy loss given by: -(*actual converted audio data*) log (*predicted first speech data*). Alternatively, the comparator 43 may compute a loss metric such as a mean squared error. The gradients of the error with respect to the weights Θ of the prediction network may be found using a back propagation through time algorithm. An optimiser function such as a gradient descent algorithm may then be used to learn revised weights Θ. Revised weights are then used to update (represented by -···- in figure 3 a and b) the NN model in the prediction network 21.

The training of the Vocoder 23 according to an embodiment is illustrated in Figure 3 (b) and is described next. The Vocoder is trained from a training set of text and audio pairs 40 as shown in Figure 3 (b). In the figure, solid lines (-) represent data from a training sample, and dash-dot-dot-dash (-···-) lines represent the update of the weights of the neural network. Training text 41a is fed in to the trained prediction network 21 which has been trained as described in relation to Figure 3(a). The trained prediction network 21 is configured in teacher-forcing mode - where the decoder 35 of the prediction network 21 is configured to receive a conversion of the actual training audio data 41b corresponding to a previous step, rather than the prediction of the intermediate speech data from the previous step - and is used to generate a teacher forced (TF) prediction of the first speech data 25c. The TF prediction of the intermediate speech data 25c is then provided as a training input to the Vocoder 23. The NN of the vocoder 23 is then trained by comparing the predicted output speech 9b with the actual audio data 41b to generate an error metric. According to an example, the error may be the cross entropy loss given by: - *(actual converted audio data 41b)* log (*predicted output speech 9b*). The gradients of the error with respect to the weights of the CNN of the Vocoder 23 may be found using a back propagation algorithm. A gradient descent algorithm may then be used to learn revised weights. Revised weights Θ are then used to update (represented by -··- in figure 3 (b)) the NN model in the vocoder.

The training of the Vocoder 23 according to another embodiment is illustrated in Figure 3 (c) and is described next. The training is similar to the method described for Figure 3 (b) except that training text 41a is not required for training. Training audio data 41b is converted into first speech data 25c using converter 147. Converter 147 implements the same operation implemented by converter 47 described in relation to Figure 3 (a). Thus, converter 147 converts the audio waveform into a mel spectrogram. The intermediate speech data 25c is then provided as a training input to the Vocoder 23 and the remainder of the training steps are described in relation to Figure 3 (b).

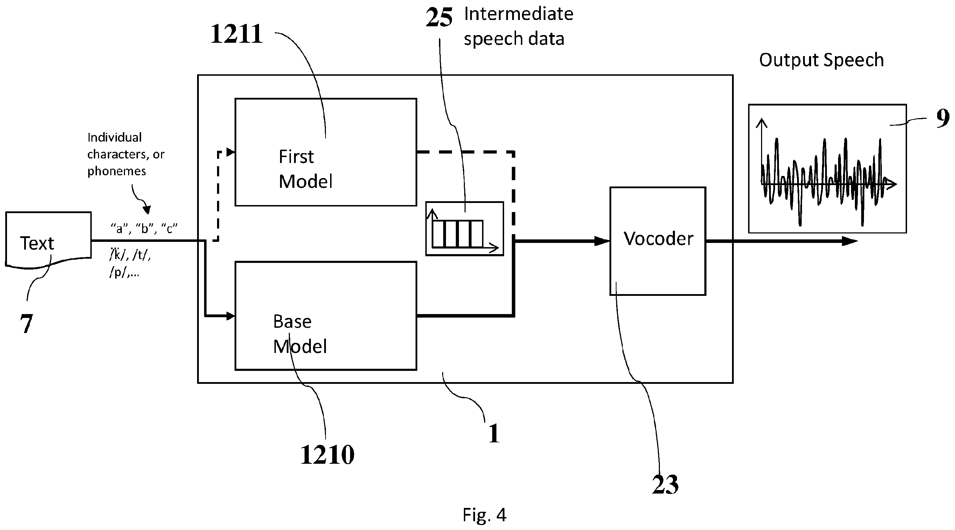

Figure 4 shows a schematic illustration of a text to speech synthesiser 1 for generating speech 9 from text 7 according to another embodiment. The synthesiser 1 is similar to that of Figure 1 except that the prediction network 21 is replaced by a base model 1210 and a first model 1211. Each of the base model 1210 and the first model 1211 may be similar to the prediction network 21 as described in relation to Figure 2. Text input 7 is directed to either the base model 1210 or the first model 1211 to convert the text into an intermediate speech data 25. The intermediate speech data 25 is then converted to an output speech 9 as described above in relation to Figure 1. As will be described below, the base model 1210 and the first model 1211 are trained differently such that their trainable parameters learn different values. For the same text input 7, the intermediate speech data 25 generated by the base model 1210 will be different from that generated by the first model 1211.

Additionally or optionally, the first model 1211 is configured so that the intermediate speech data 25 generated results in output speech that has an attribute that is more pronounced compared to that generated by the base model 1210. A speech attribute is related to a speech pattern, where the speech pattern refers to a distinctive manner in which a person expresses himself. When an output speech conveys a speech pattern more strongly than another, it is meant that the output speech is perceived by human listeners to be more distinctive and/or that the speech attribute is perceived by human listeners to be more pronounced.

Speech patterns may be characterised by different speech attributes. Examples of speech attributes comprise emotion, intention, projection, pace, and accents amongst others. Note that the speech data may include sounds such as sobbing or laughing for example.

When an output speech has a speech pattern characterised by the speech attribute of emotion, it is meant that the output speech is perceived by human listeners to convey a particular emotion. When an output speech conveys a higher level of emotion than another, it is meant that the emotion is perceived by human listeners to be more intense. For example, an output speech may convey the emotion of sadness, anger, happiness, surprise etc.... Taking "sadness" as an example, there may be different degrees of sadness. An output speech might sound mildly "sad", while an output speech where the level of emotion is more pronounced might sound extremely "sad" (e.g. comprising sobbing, or crying).

When an output speech has a speech pattern characterised by the speech attribute of intention, it is meant that the output speech is perceived by human listeners to convey a particular meaning that is separate from the words. For example, the meaning may be conveyed from the manner in which a speaker modulates his voice. When an output speech coveys a higher level of intention than another, it is meant that the intention is perceived by human listeners to be more intense. For example, an output speech may convey sarcasm. A sarcastic comment may be made with the intent of humour or may be made with the intent of being hurtful. For example, the expression "This is fantastic!" can be used to imply a different meaning (even the opposite meaning) depending on how it is said. Taking "sarcasm" as an example of intention, there may be different degrees of sarcasm. An output speech might sound mildly sarcastic, while an output speech that conveys a higher level of intention might sound extremely sarcastic.

When an output speech has a speech pattern characterised by the speech attribute of projection, it is meant that the output speech is perceived by human listeners to convey particular projection. When an output speech coveys a higher level of projection than another, it is meant that the projection is perceived by human listeners to be more intense. Projection comprises whispering, and shouting amongst others. Taking "shouting" as example, there may be different degrees of shouting. For example, an output speech might come across as a shout when a teacher asks students to "Get out of the room", while an output speech conveys a higher level of projection for example when, a police officer is yelling instructions to the public to "Get out of the room" during an emergency situation.

When an output speech has a speech pattern characterised by the speech attribute of pace, it is meant that the output speech is perceived by human listeners to convey a particular pace. Pace may comprise rhythm. Rhythm refers to the timing pattern among syllables and is marked by the stress, timing and quantity of syllables. For example, a measure of rhythm may be obtained by considering the differences between sequences of syllables. Alternatively or additionally, the pace of an output speech comprises a rate of delivery (also referred to as the tempo). When an output speech coveys a higher level of pace than another, it is meant that the pace is perceived by human listeners to be more distinct. For example, the pace may be quantified as the number of syllables per minute.

When an output speech has a speech pattern characterised by the speech attribute of accent, it is meant that the output speech is perceived by human listeners to convey a particular accent. When an output speech conveys a higher level of an accent than another, it is meant that the accent is perceived by human listeners to be stronger. Taking the English language as a non-limiting example, accents may comprise regional variations such as British English, American English, Australian English amongst others. Accents may also comprise other variations such as a French accent, or a German accent amongst others. Taking a French accent in an utterance in the English language as example, the output speech may have different degrees of French accent; on one hand, the output speech may have a barely noticeable accent, while on the other hand, the output speech may have a strong French accents (where e.g. the vowels might be heavily distorted from the usual English speech).

An output speech may convey a speech pattern that has a single attribute. An output speech may alternatively convey multiple attributes. For example, an output speech may have a speech pattern that conveys sadness (emotion), with a French accent (accent), and projected as a whisper (projection). Any number of attributes may be combined.

For ease of explanation, in the embodiments below, the output speech may be described in terms of a speech data having the speech attribute of "emotion". It will be understood however that any other attribute is equally applicable used in those embodiments. It will further be understood that attributes can be combined.

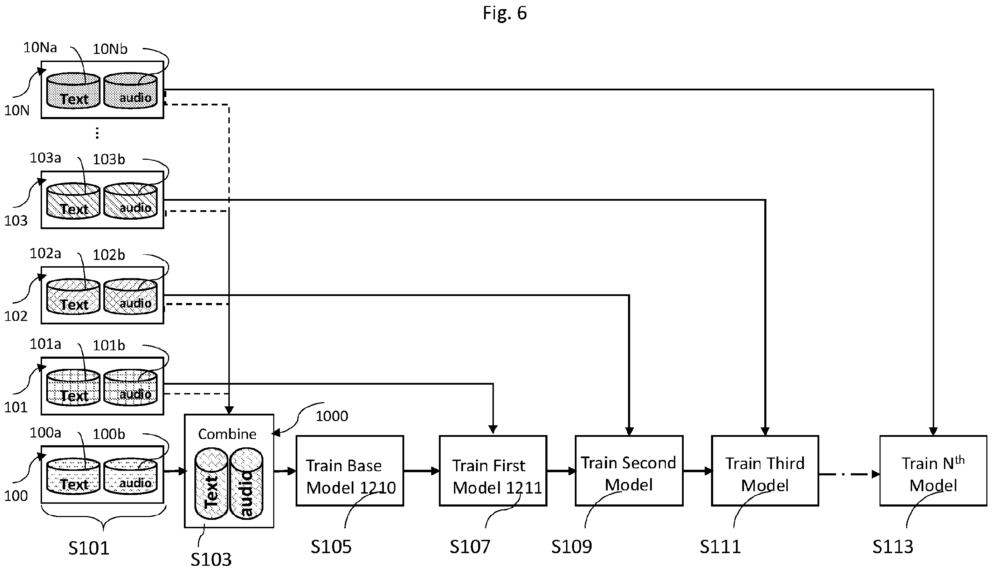

Additionally and optionally, the synthesiser 1 of Figure 4 comprises further models. For example, the synthesiser 1 may comprise a second model, or a second and a third model, or a second, third and fourth model, and so on. These further models may also be referred to as intermediate models. How these intermediate models are trained will be described further below in relation to Figure 6. As described above in relation to Figure 4, text input 7 is directed to one of the models to convert the text into an intermediate speech data 25. The models may be trained differently such that their trainable parameters have different values, such that the intermediate speech data 25 generated by each model is different.

Additionally and optionally, the synthesiser 1 of Figure 4 comprises models that are trained using audio samples from single human actor. Each model in the synthesiser 1 may be trained on audio samples provided from a single human actor; for example, both the base model 1210 and the first model 1211 are each trained using audio samples obtained from the same human actor. The voice samples themselves may be different.

Alternatively and optionally, the synthesiser 1 of Figure 4 comprises models that have been trained with samples from different human actors; for example, the base model 1210 may be trained using audio samples obtained from a first human actor and the first model 1211 may be trained using audio samples obtained from a second human actor. Yet alternatively, the base model 1210 is trained using audio samples obtained from a plurality of human actors.

Additionally and optionally, the synthesiser 1 of Figure 4 comprise models where all the models have been trained on audio samples that have the same attribute. When the attribute is emotion, for example, the audio samples convey one of the emotions of "sadness", "anger", "surprise", etc... As described further below, each model is trained using audio samples conveying a different level of emotion, such that each model is trained to generate intermediate speech data 25 that conveys a different level of emotion. For example, a model may generate speech that conveys mild sadness, while another model may generate speech that conveys extreme sadness. In use, text input 7 is input into the synthesiser 1 and directed to one of the models in order to generate intermediate speech data 25 from which output speech 9 is obtained. Since the level of emotion conveyed by the intermediate speech data 25 depends on which model is used, different output speech 9, each conveying different levels of emotion, may be generated by the synthesiser.

Additionally and optionally, the base model 1210 is trained using voice samples that are neutral and that are not perceived to convey any emotion. The first model 1211 is then trained using voice samples that convey mild emotion. The voice samples used to train the first model 1211 and the voice sample used to train the base model 1210 are perceived by human listeners to be similar. Training the first model 1211 using such voice samples (which convey mild emotion and are perceived to be similar to the neutral voice samples used to train the base model 1210) is found to result in a model that performs well (as measured by a validation loss, which will be described further below).

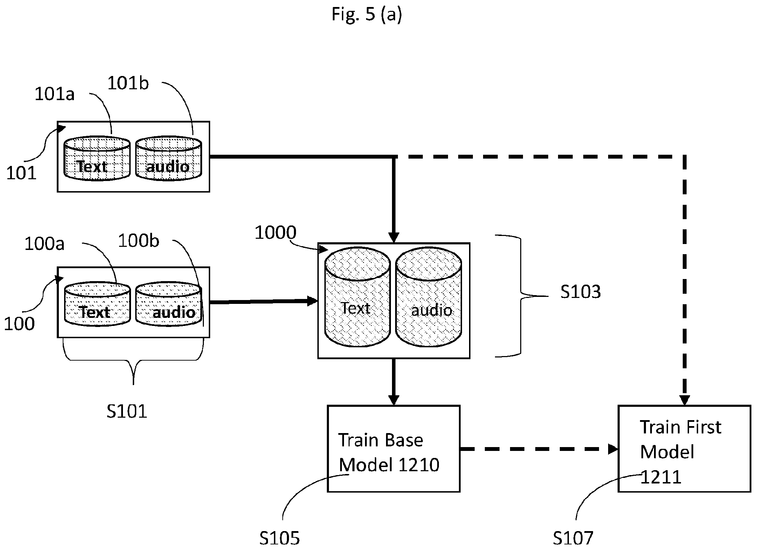

Figure 5 (a) shows a schematic illustration of a method of training the base model 1210 and the first model 1211 described in relation to Figure 4. In step S101, a base sub-dataset 100 and a first sub-dataset 101 are obtained. The base sub-dataset 100 comprises samples of text 100a and their corresponding audio 100b. Thus, the base sub-dataset 100 comprises a labelled training dataset. A human actor is provided with a number of text samples which he then reads out to record corresponding audio samples. For example, the human actor reads out and records individual sentences. The human actor records the voice samples using a neutral style. A neutral style is a style where the audio samples do not convey any particular emotion. Audio samples recorded in a neutral style are not perceived to sound "angry", or "sad", or "surprised", etc... The audio samples recorded form the audio 100b and their corresponding text samples form the text 100a of the base sub-dataset 100.

The samples of the base sub-dataset 100 are obtained from a human actor. By training the base model 1210 using samples from the base sub-dataset 100 (which contain samples from a human actor), the base model 1210 may perform well for that particular actor. Subsequent models trained starting from the base model 1210 may also perform well for the same actor. For example, the subsequent models generate accurate speech and/or exhibit low validation losses (defined further below). Conversely, if subsequent models trained starting from the base model 1210 are then further trained using samples from a different actor, the subsequent models may not perform as well.

Additionally and optionally, the base sub-dataset 100 comprises text and audio samples corresponding to thousands of sentences. Optionally, the base sub-dataset comprises text and audio samples corresponding to one thousand sentences or more.

Additionally and optionally, the base sub-dataset 100 comprises text and audio samples corresponding to thousands of non-repeating sentences from a particular domain (which is described further below) and in a particular language. When the thousands of sentences are non-repeating, the base sub-dataset 100 may be adequate to train the model. For example, when the thousands of sentences are non-repeating, the sentences cover most of the phonemes of the language such that the model sees most of the phonemes during training.

A domain may be understood to refer to different applications such as audiobooks, movies, games, navigation systems, personal assistants etc.... For example, when the synthesiser is used in a TTS system for audiobook applications, the synthesiser may be trained using a base sub-dataset 100 comprising samples that are obtained from an audiobook dataset. An audiobook dataset may contain samples from audiobooks in general (and not just from a specific audiobook). Similarly a game dataset may contain samples from games in general (and not just from specific games).

Additionally and optionally, for a particular language being used, the base sub-dataset 100 comprises samples that represent a neutral speech pattern. A neutral speech pattern is a speech pattern that does not convey any particular attributes. For example, when the attribute concerned is the emotion of sadness, a neutral speech pattern is not perceived by a human listener as conveying sadness.

The first sub-dataset 101 is obtained from a dataset comprising recordings that are from the same domain as the base sub-dataset 100. For example, if the base sub-dataset 100 comprises samples from an audiobook dataset, the first sub-dataset 101 also comprises samples from an audiobook dataset. The first sub-dataset 101 comprises audio samples that convey a degree of sadness that is higher than the degree of sadness conveyed by the base-sub-dataset 100 (which comprises neutral recordings). In other words, the attribute of emotion (sadness) is more pronounced in the first sub-dataset 101 than the base sub-dataset 100.

Additionally and optionally, the audio recordings for the first sub-dataset 101 are obtained from the same the human actor from whom the audio recordings of the base sub-dataset 100 were obtained. As explained above, the first model, being trained starting from the base model 1210, may perform well since it is trained from samples from the same actor.

Additionally and optionally, the first sub-dataset 101 comprises audio and text samples that correspond to the audio and text samples of the base sub-dataset 100. For example, the text samples of the first sub-dataset may be the same as the text in the base sub-dataset; however, the audio samples differ in that the audio samples of the fist sub-dataset are perceived to convey a higher degree of sadness than the audio samples of the base sub-dataset.

Audio recordings for the first sub-dataset 101 are obtained as follows. A human actor is provided with a number of text samples which he then reads out and records corresponding audio samples. The text samples correspond to the particular language and to the domain of the samples of the base sub-dataset 100. Taking the attribute of emotion as a non-limiting example, for the first sub-dataset 101, the human actor records the audio samples using a style that conveys emotion. For example, the human actor might record the voice samples using a style that conveys one of the emotions of "anger", "sadness", or "surprise" etc... Audio samples that are recorded in such a style are perceived by listeners as sounding "angry", or "sad", or "surprised" etc... The audio samples recorded from the audio 101b and their corresponding text samples form the text 101a of the first sub-dataset 101.

Additionally and optionally, the first sub-dataset 101 may comprise fewer samples than the base sub-dataset.

Additionally and optionally, the first sub-dataset 101 comprises text and audio samples corresponding to tens of sentences for example.

In order to record an audio sample that conveys a certain emotion, a human voice actor may get himself into character, for example, by placing themselves in a situation that generates the emotion he intends to covey. For example, to convey sadness, the voice actor may get into a sad state of mind. The voice actor may find it difficult to maintain such a state for a long time. Therefore, the voice actor may find it difficult to record a large number of audio samples that convey emotion. Therefore, datasets that comprise audio samples conveying high levels of emotion may be small compared to the base sub-dataset and comprise, for example, text and audio samples corresponding to tens of sentences.

In step S103, the base sub-dataset 100 and the first sub-dataset 101 are combined to form a combined dataset 1000. The combined dataset 1000 comprises text and audio samples from the base sub-dataset and from the first sub-dataset.

Additionally and optionally, in step S103, the samples from the base sub-dataset are appended to the samples from the first sub-dataset to form the combined dataset 1000. When samples from the combined dataset are used for training (as described further below), the samples are retrieved in a random order such that the source of the samples (i.e. whether the samples are from the base sub-dataset or the first sub-dataset) varies randomly as the training progresses.

Additionally and optionally, the training batches are acquired from the combined dataset 1000 during training. During training, the entire combined dataset 1000 is not passed to the base model 1210 at once; the combined dataset 1000 is divided into a number of training batches and the training batches are each passed to the base model 1210 in turn. The training batches are configured such that each batch contains samples from the base sub-dataset and from the first sub-dataset in a ratio that is comparable to the ratios of the size of the base sub-dataset to the first sub-dataset. According to an example, when the base sub-dataset has 1000 samples and the first sub-dataset has a size of 100 (a ratio of 10:1), each training batch has samples from both sub-datasets in ratios ranging from 20:1 to 2:1.

Additionally and optionally, when the size of the base sub-dataset is much greater than the size of the first sub-dataset, the size of the base sub-dataset may be reduced, so that the ratio of samples from both sub-datasets is less skewed. Training with a less skewed training batch may improve the speed at which the model learns. For example, when the base sub-dataset has 10000 samples and the first sub-dataset has a size of 10 (a ratio of 1000:1), the size of the base sub-dataset may be reduced to the 1000 samples (a ratio of 100:1).

In step S105, the base model 1210 is trained using the combined dataset 1000. The training of the base model 1210 is similar to the training of the prediction network 21 described in relation to Figure 3 (a) except that the combined dataset 1000 is used instead of dataset 41. By training with the combined dataset 1000, which comprises samples from the base sub-dataset 100, the base model 1210 learns to produce comprehensible speech from text. This knowledge is slow to learn but is retained during training with subsequent sub-datasets (described below). Step S105 may be understood as a training step that gives the base model 1210 of the synthesiser the ability to generate accurate and comprehensible speech from text. This ability is used as a starting point and transferred during further training with subsequent sub-datasets (described below).

In step S107, the first model 1211 of the synthesiser is trained. To train the first model 1211, the trained base model 1210 is used as a starting point and further trained using the first sub-dataset 101 (this approach is also referred to as transfer learning). Using the base model 1210 as a starting point means that the parameters of the first model 1211 are initialised to the learned values of the trained base model 1210. The parameters of the first model 1211 are further updated during training with the first sub-dataset 101. Training the first model 1211 is similar to the training of the prediction network 21 described in relation to Figure 3 (a). When trained as above, the first model 1211 retains the ability of the base model 1210 to generate accurate and comprehensible speech from text, and further gains the ability to generate speech that conveys emotion.

The first sub-dataset 101 may contain fewer samples than the base sub-dataset 100. As described above, the first sub-dataset 101, which comprises samples conveying more emotion than the samples of the base sub-dataset 100, may comprise tens of samples. It has been found that training the base model 1210 and the first model 1211 as described above in Figure 5 (a) results in the first model 1211 being accurate and able to generate speech that conveys emotion.

For each of the sub-datasets 100 and 101 that are used for training, a corresponding validation dataset comprising samples that have similar characteristics (e.g. neutral or conveying emotion) may be available. The validation dataset corresponding to each sub-dataset comprises samples from the sub-dataset that have been randomly selected and kept out of the training. The validation loss of the first model 1211 is obtained using the validation dataset corresponding to the first sub-dataset.

Returning to Figure 5 (a), optionally and additionally, prior to being trained in step S105 using the combined dataset 1000, the base model 1210 is pre-trained. The pre-training comprises training the base model 1210 using another dataset. The pre-training is similar to the training described in relation to Figure 3 (a) for example. The other dataset contains samples that are different from the base-sub 100 dataset and from the first sub-dataset 101. For example, the other dataset comprises audio samples recorded in one or more human voices. Additionally and optionally, the pre-training comprises training with the other dataset, and then transfer learning using samples from the present voice or actor. Additionally and optionally, the other dataset is obtained from public datasets such as LibriSpeech.

By pre-training the base model 1210, it can be ensured that the base model 1210 is able to generate comprehensible speech with sufficient accuracy. Furthermore, the amount of data required to further train the base model 1210 and to train the first model 1211 may be reduced.

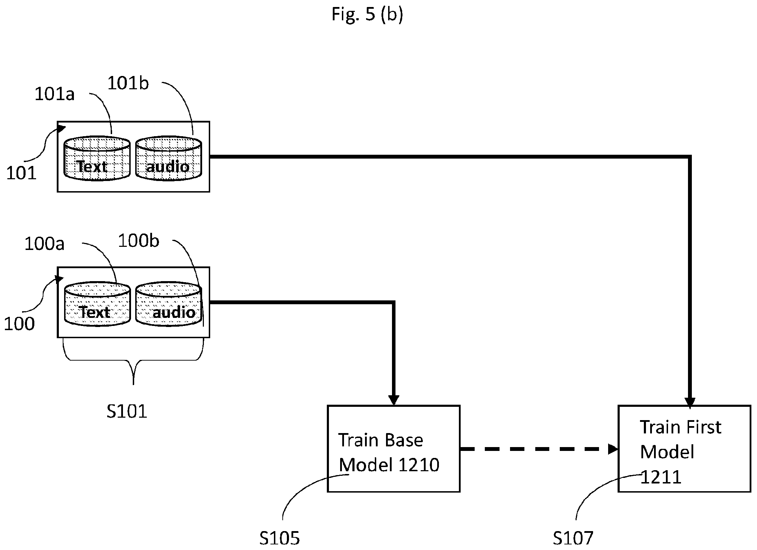

Figure 5 (b) shows a schematic illustration of another method of training the base model 1210 and the first model 1211 described in relation to Figure 4. The method of Figure 5 (b) is similar to that of Figure 5 (a) except that the step S103 of combining the base sub-dataset 100 and the first sub-dataset 101 to form a combined dataset 1000 is omitted. Instead, in step S105, the base model 1210 is trained using the base sub-dataset 100, and in step S107, the first model 1211 is trained using the first sub-dataset 101.

In the training method of Figure 5 (b), the training step S105 using the base sub-dataset 100 and the training step S107 using the first sub-dataset 101 are balanced such that the first model 1211 has a good performance. The performance of a trained model may be characterised by a performance metric. By a trained model having a good performance, it is meant that the performance metric falls within a certain predetermined range or has a predetermined value.

The predetermined range or value may be experimentally obtained by training different models under different conditions and then performing a human listening test (described further below) to assess the performance of each model. For example, the different models may be obtained by training a model using a dataset for a number of training steps, saving a model checkpoint (described further below), and repeatedly further training to obtain other model checkpoints. The different model checkpoints then act as the different models used for assessing performance and determining the predetermined range.

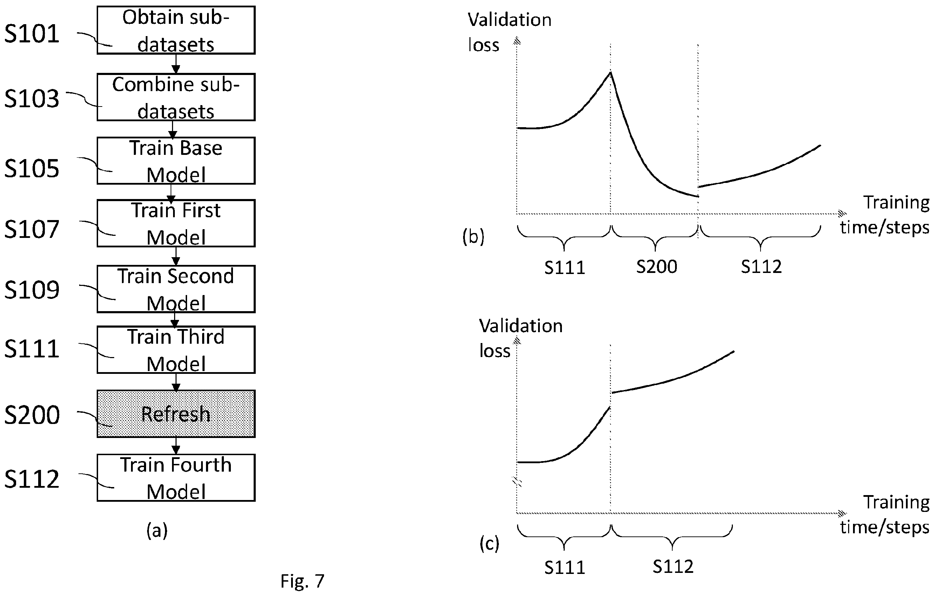

An example of a performance metric is the validation loss. Details of the validation loss are provided further below in relation to Figure 7.

For example, to have a good performance, the validation loss of the trained first model 1211 is at most approximately 0.5. For example, at most approximately 0.5 refers to 0.6 or less. For the validation loss of the first model 1211 to be at 0.6 or less, the validation loss of the base model 1210 must be smaller than the validation loss of the first model 1211, since validation losses increase as training progresses (as described below in relation to Figure 7).

It will be understood that in an alternative embodiment, the features described above in relation to Figures 5 (a) and 5 (b) may be combined. For example, step S103 of Figure 5 (a) may be combined with the feature of Figure 5 (b) that the training steps S105 and S107 are balanced such that the first model 1211 has a good performance.

Returning to Figure 4, synthesiser 1 comprises the base model 1210 and the first model 1211, where the base model 1210 and the first model 1211 have been trained as described above in relation to Figure 5 (a) or (b).

In an alternative example, synthesiser 1 comprises a single model which is the first model 1211 for example. In other words, synthesiser 1 may be similar to the synthesiser shown in Figure 1 except that the prediction network 21 is replaced by the first model 1211.

Additionally or alternatively, the synthesiser 1 of Figure 4 comprises models that relate to multiple speakers. Such models are referred to as multi-speaker models. Multi-speaker models may be similar to the prediction network described in relation to Figure 2, except that the model further comprises a speaker identification vector for each speaker. The speaker identification (speaker id) vector may be a one-hot encoding vector for example. The speaker-embedding vector may be understood as a further input to the prediction network of Figure 2. The speaker id is a vector that is fixed for each speaker; it is not a trainable parameter of the prediction network and is not learned during the training of the prediction network. However, the by taking the speaker id as an input, the prediction network learns to use that speaker id to produce speech with the properties associated to that speaker.

In use, the speaker id may be used as an input to influence the model to generate output speech according to the voice of a particular actor. Alternatively, if no speaker id is specified, a default value may be used.

Returning to the synthesiser 1 of Figure 4, either the base model 1210, or the first model 1211, or both may be multi-speaker models.

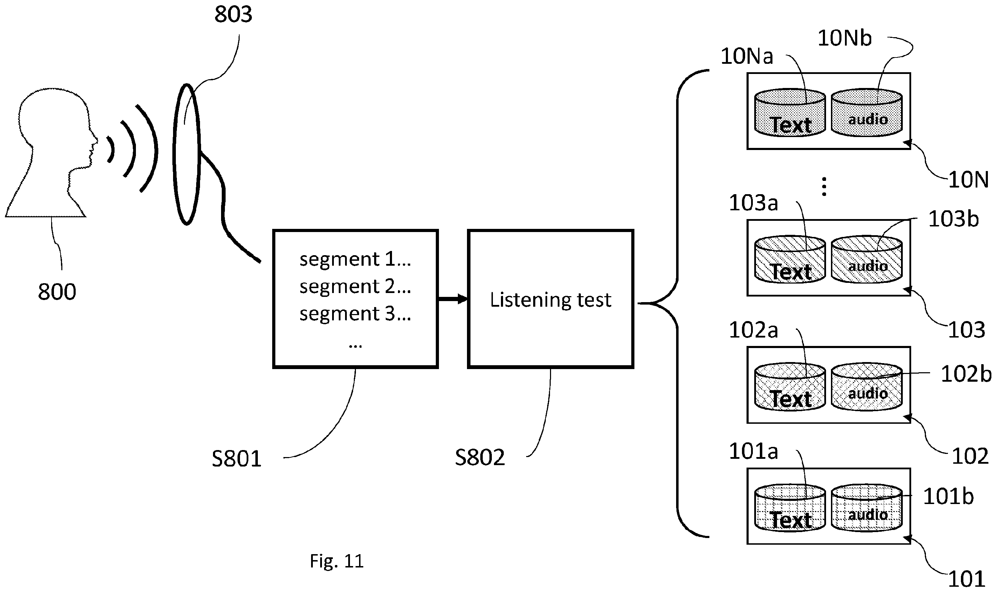

Figure 6 shows a schematic illustration of a method of training the base model 1210, the first model 1211, a second model, a third model, and further models up to N models, where N is a natural number. The first model 1211, the second model, the third model, and any further models up to the Nth model are also referred to as intermediate models. For example, N is equal to one of 4, 5, 6, 7, 8 and so on. The method of training of Figure 6 is similar to the method of training described in relation to Figure 5 (a) except that N models are trained using N sub-datasets. The sub-datasets are also referred to as intermediate sub-datasets. The intermediate sub-datasets comprise audio and text samples obtained from the same domain as one another and as the base sub-dataset 100. Higher sub-datasets comprise audio samples that are perceived to convey more intense emotion than lower ones. For example, the second sub-dataset comprises audio samples that convey more intense emotion than the first sub-dataset; the third sub-dataset comprises audio samples that convey more intense emotion than the second sub-dataset; and so on. For example, when N = 4, the base sub-dataset 100 contains neutral sounding samples; the first sub-dataset 101 contains samples that sound mildly "sad"; the fourth sub-dataset contains samples that sound extremely "sad" (e.g. comprising sobbing, or crying); while the second and third sub-datasets convey intermediate levels of sadness, with the third sub-dataset sounding more sad than the second sub-dataset. The obtaining of the audio samples for the first, second, third and up to Nth sub-dataset will be described further below in relation to Figure 11.

Step S101 is similar to that of Figure 5 except that data is obtained from N sub-datasets. Step S103 is similar to that of Figure 5 except that data from N sub-datasets is combined to form the combined dataset 1000. Steps S105 and S107 are the same as in Figure 5.

Step S109 is similar to S107, except that the second model of the synthesiser is trained. To train the second model, the trained first model 1211 is used as a starting point and further trained using the second sub-dataset 102 (this approach is also referred to as transfer learning). Using the first model 1211 as a starting point means that the parameters of the second model 1211 are initialised to the learned values of the trained first model 1211. The parameters of the second model are further updated during training with the second sub-dataset 102. Training the second model is similar to the training of the prediction network 21 described in relation to Figure 3 (a). When trained as above, the second model retains the ability of the first model 1211 and further enhances the ability to generate speech that conveys emotion. The second model generates speech that is perceived to be more emotionally intense than the first model.

Step S111 for training the third model is similar to S109 except that the second trained model is used as starting point. The third model has the ability to generate speech that conveys more intense emotion than the second model. Step S113 for training the Nth model is similar to S111 and S109 except that the starting point is the previously trained model (the N-1th model).

The method described in relation to Figure 6 may be used to provide models for a synthesiser 1 similar to that described in relation to Figure 4. The synthesiser 1 may comprise all the models trained during the training of Figure 6. The synthesiser then comprises a first model 1211, a second model, a third model, and further models up to N models. In use, the text 7 is directed to one of the models which converts the text into speech data.

Alternatively, the synthesiser 1 may comprise a subset of the models trained. For example, the synthesiser comprises the base model 1210, the first model 1211 and the second model. Yet alternatively, the synthesiser 1 comprises the third model; or comprises the third model and the fourth model; or comprises the third model, a fourth model, and a fifth model (when $N \geq 5$).

Additionally and optionally, in the method described in relation to Figure 6, the number of samples included in each sub-dataset decreases with the increasing level of the sub-dataset. For example, the second sub-dataset comprises fewer samples than the first sub-dataset; the third sub-dataset comprises fewer samples than the second sub-dataset; and up to the Nth sub-dataset which comprises fewer samples than the $N-1^{th}$ sub-dataset. When the second, third models and up to the Nth model are trained using the sub-datasets above, the validation loss of the models may remain low.

In another embodiment which is not shown, a method of training the base model 1210, the first model 1211, a second model, a third model, and further models up to N models, where N is a natural number, is similar to the method described in relation to Figure 6 above except that the method does not contain the combination step S103. Instead, the base model 1210 is trained using the base sub-dataset 100. This method is also similar to the method illustrated in Figure 5 (b) except that N models are trained using N sub-datasets. As for Figure 5 (b), the N training steps are balanced such that the $N^{th}$ model has a good performance. By good performance, it is meant that a performance metric of the $N^{th}$ model is within a predetermined range. The predetermined range may be experimentally obtained similar to the method of Figure 5 (b) above.

Additionally and optionally, the performance metric is the validation loss. Details of the validation loss are provided further below in relation to Figure 7. For example, to have a good performance, the validation loss of the trained Nth model is at most approximately 0.5 (0.6 or less).

For example, when N = 3, the validation loss of the third model after S111 should be 0.6 or less. To obtain this, the previous validation losses from previous training steps should aggregate to 0.6 or less in total. A non-limiting example of values of validation loss are: after S105, validation loss = 0.2, after S107, validation loss = 0.3, after S109, validation loss = 0.4. After step S111, the validation loss may be 0.6 or less, which results in a good performance. During training, in S105, once validation loss reaches 0.2, the next model (First model 1211 in this case) is trained. In S107, once validation loss reaches 0.3, the next model (second model) is trained. In S109, once validation loss reaches 0.4, the next model (third model) is trained.

A non-limiting example of unsuitable validation losses are: after S105, validation loss = 0.3, after S107, validation loss = 0.5, after S109, validation loss = 0.8.

Although the above examples consider the case where N = 3, training with any value of N is similar. To determine up to what point (i.e. up to what value of validation loss) a training stage (e.g. S105, S107, S109 ...) should be carried out to, the rate at which the validation loss increases after S105 and/or S107 is noted. The rate may refer to the increase in validation loss per number of training samples. Using the obtained rate, a projection of the value for the validation loss for the Nth trained model may be obtained. When the projected value for the Nth trained model is 0.6 or less, the training is as described above.

Alternatively, when the projected value of the validation loss for the Nth trained model is 0.6 or more, then one or more additional "Refresh" steps are introduced between the training stages. The "Refresh" step is described in detail further below in relation to Figure 7. Briefly, the "Refresh" step is a training step that may be used to lower the validation loss (or, more generally, to improve a performance metric). By introducing one or more "Refresh" steps between training stages, the validation loss for the Nth trained model may be kept at 0.6 or less.

In a comparative example which is not shown, a model is trained first with the base sub-dataset 100, and then directly with a fifth sub-dataset (which is not shown). The comparative model is compared to a fifth model (N=5) trained as described in relation to the embodiment shown in Figure 6. The comparative model is found not to generate speech of sufficient quality compared to the fifth model. For example, the comparative model exhibits higher validation loss (the validation loss is described further below) than the fifth model. The comparative model is also found to exhibit a lower speech pattern accuracy than the fifth model as perceived by human listeners (the speech pattern accuracy is described below). The low speech pattern accuracy of the comparative model is related to the model's inability to generate speech of sufficient quality, where the generated speech fails to convey any specific speech pattern.

| | Fifth model trained according to embodiment of Figure 5 (a) | Comparative Model |
|---|---|---|
| Speech pattern accuracy as perceived by human listeners | high | low |

(continued)

|  | Fifth model trained according to embodiment of Figure 5 (a) | Comparative Model |
|---|---|---|
| Validation loss | 0.6 @ 20k training steps | 0.9 @ 20k training steps |

In the above comparison, the validation loss obtained from the fifth model trained for 20k training steps is 0.6, when the fifth model is trained according to the embodiment described in Figure 6 (that is, intermediate models are trained). Here, the 20k training steps refer to the total number of training steps. In contrast, the comparative model exhibits a validation loss of 0.9 after 20k training steps. Thus, the model according to the embodiment shows approximately 33% better performance (measured in terms of validation loss). It is also found that the fifth model when trained according to the embodiment of Figure 5 (b) and the example above exhibits a lower loss compared to the comparative model after the same number of training steps. A training step concerns the update of the model after processing one batch of data. One batch of data may correspond to whole sentences for example.

In the above comparison, the speech pattern accuracy as perceived by human listeners is determined by performing a listening test. In the speech pattern accuracy test, the human listeners rate the synthesised speech as high or low (or alternatively, as good or bad), based on how accurate they perceive the speech to be. The fifth model when trained according to the embodiment of Figure 5 (a) was found to have a high speech pattern accuracy compared to the comparative model. It is also found that the fifth model when trained according to the embodiment of Figure 5 (b) has a high speech pattern accuracy compared to the comparative model.

Alternatively or optionally, the speech pattern accuracy as perceived by human listeners is based on a mean opinion score (MOS) test. A mean opinion score is a numerical measure of a quality an approximation of a real world signal (e.g. synthesised speech) as judged by humans. For example, when the speech pattern to be tested is intended to portray the attribute of emotion and in particular sadness, human judges might be asked to "Rate on a scale of 1 to 5 how accurate you think this model is at portraying sadness", The mean opinion score for each model is then obtained by taking the average of all the scores from the different human judges.

In the above comparison, the validation loss is the loss obtained by comparing the output of the trained model with audio samples from a validation data set. The validation loss function may be similar to the loss function used in the training of the prediction network as described in relation to Figure 3 (a). The validation data set refers to samples that are similar to the samples in the data set that were used for training but that have not been used in the training of the model. Thus, the trained model has not "seen" the validation data samples during training, and the validation loss gives an indication of how well the model performs when presented with text that it has not seen before. A low validation loss means that the speech predicted by the trained model performs well compared to the actual audio sample. A high validation loss indicates that the model does not perform well on samples that it has not seen before (also referred to as overfitting).

Figure 7 (a) shows a schematic illustration of a method of training a base model 1210, a first model 1211, a second model, a third model and a fourth model. The method is similar to that described in Figure 6, except that an additional step S200 is performed after step S111 and before training the fourth model. The step S200 is referred to as a "Refresh" step and comprises further training a model using either the combined dataset 1000 shown in Figure 6, or using the base sub-dataset 100 (not shown). As shown in Figure 7 (a), the third model obtained in S111 is refreshed in step S200. In step S112, a fourth model is further trained using the refreshed model obtained in step S200. Alternatively, the additional step S200 can be applied when the method does not include step S103; in this case, referring to the method of Figure 7 (a), the third model obtained in S111 is refreshed in step S200 by further training with the base sub-dataset 100.

Figure 7 (b) shows a schematic illustration of the validation loss during the method of training of Figure 7 (a). During step S111 where the third model is trained using the third sub-dataset 103, which comprises samples conveying a high level of emotion, the validation loss of the third model may increase as illustrated. The validation loss may be obtained at regular intervals and computed using validation data corresponding to the third sub-dataset. When training with small datasets such as the first, second, third, or the Nth sub-dataset, the validation loss is obtained at intervals of, for example, between 250 to 500 training steps. The state of the model (i.e. the learned values of the trainable parameters) is saved every time a validation loss is computed; this is because the model is expected to change a lot quite quickly when it is trained from sub-datasets comprising audio samples conveying a high level of emotion. The saved states of the models are also referred to as model checkpoints. By computing the validation loss and saving the state of the model at intervals of 250 to 500 training steps, a more detailed understanding of the training may be obtained and more model checkpoints at different stages of training are available. When training with large datasets such as the base sub-dataset or the combined dataset 1000, the validation loss may be computed at intervals of 2500 to 5000 steps. Model checkpoints are saved every time the validation loss is computed.

In step S200, the trained third model from S111 is further trained using the combined dataset 1000. Step S200 is referred to as a 'refresh' step and, in general, the refresh step is performed to improve a performance metric of the trained model. As illustrated in Figure 7 (b), the further training of S200 may cause the validation loss to decrease. The validation loss is calculated from the validation data corresponding to the third sub-dataset. Step S200 may be performed for a number of sample iterations For example, S200 may be performed for 10,000 to 40,000 iterations using a minibatch size of 32. The minibatch size refers to the number of training samples (which is less than the size of the actual dataset) used to compute a mean gradient used to update the weights of the model during training.

Alternatively, step S200 may be performed until the validation loss drops below a certain threshold value. The threshold value is determined empirically and depends on e.g. the speaker, the language, the speech pattern or attribute being considered. For example, the S200 is performed and the validation loss curve monitored until the curve suggests that there is no point training further. For example, the validation loss curve may have flattened. At this point a human based listening test is performed to confirm the quality (as perceived by a human listener).

Alternatively, S200 is performed until at least 2 model states have been saved. Model states may be saved every 500 steps for example.

Yet alternatively, Step S200 may be performed until the generated speech achieves a certain quality. The quality is determined by considering two aspects. Firstly, the validation loss is considered; if the validation loss has dropped below an empirically determined threshold value, then a listening test is performed by human operators to determine whether the generated speech remains comprehensible while conveying the intended emotion. If the model passes the human test, then step S200 is complete. The threshold value may be different for different languages, or for different attributes, or for different voice actors. The threshold value may be determined empirically on a case-by-case basis, for example, by human operators performing listening tests.

Additionally and optionally, the threshold value for the validation loss is approximately 0.5. For example, the threshold value is less than or equal to 0.6. This threshold value has been empirically found to yield models that generate good quality speech.

Alternatively, the predetermined threshold value may be a fraction of the peak value of the validation loss obtained during S111.

In S112, a fourth model is trained using the refreshed model obtained in step S200. The validation loss of the fourth model (which is calculated using the validation data corresponding to the fourth sub-dataset) starts at a value similar to value obtained after S200 and further increases as the training in S112 progresses. Since the validation loss started at a low value, the validation loss remains acceptable and the performance of the fourth model acceptable after the training step S112.

Figure 7 (c) shows a schematic illustration of the validation loss during a method of training that is similar to that of Figure 7 (a) except that the "refresh" step S200 is removed and the training of the fourth model in S112 uses the third model trained in S111 directly. As shown in the figure, the validation loss of the fourth model (which is calculated using the validation data corresponding to the fourth sub-dataset), may starts at a value similar to the value obtained in the previous step of S112 and further increase as the training progresses. As the starting value of the validation loss may be already high, as the training step S112 progresses, the validation loss may increase and reach levels where the fourth model overfits. For example, the validation loss may increase by a factor of 50% at each level; for example, if the first model exhibits a validation loss of 0.2, the second model exhibits a validation loss of 0.3, the third model exhibits a validation loss of 0.45 etc...

Returning to Figure 7 (a), alternatively, the refresh step S200 may be introduced after the training the second model S109 and before training the third model S111, or after the training the first model S107 and before training the second model S109.

Alternatively and optionally, the refresh step S200 may be introduced after training any model after the first model 1211. Referring to the training of N models, as described in relation to Figure 6, the refresh step S200 may be introduced between the training of any two consecutive models (after the training of the first model 1211 in step S107).

Additionally and optionally, two or more refresh steps S200 may be introduced. For example, a refresh step S200 may be introduced between training the first model S107 and before training the second model S109, and between training the third model S111 and training the fourth model S112. Alternatively, a refresh step S200 may be introduced between training the first model S107 and before training the second model S109, and between training the second model S109 and before training the third model S111. Alternatively, a refresh step S200 may be introduced between training the first model S107 and before training the second model S109, between training the second model S109 and before training the third model S111, and between training the third model S111 and training the fourth model S112.

Although the embodiments described above in relation to Figures 4 to 7 use a performance metric such as the validation loss of a trained model as a measure of the model's performance, it will be understood that other performance metrics could also be used instead of the validation loss. The training procedure remains unchanged from that described in Figures 4 to 7 except that a different performance metric is used instead of the validation loss to judge if the trained model is good enough. The performance metric indicates how well the TTS system performs in use after it has been trained. For example, the performance metric indicates how well the TTS system generates output speech data from a text input.

In an alternative embodiment, the performance metric is obtained by performing a human listening test as described above to determine the speech pattern accuracy. For example, the human listeners provide a rating of high or low. If the rating is high, the performance of the trained model is considered to be good enough.

In another alternative embodiment, the performance metric is obtained by performing a Mean Opinion Score (MOS) test as described above. For example, when the MOS test is carried out on a scale of 1 to 5, a MOS of greater than 3.5 indicates that the model is good enough.

Yet alternatively, the performance metric is obtained by performing a 'MUSHRA' test. MUSHRA stands for MUltiple Stimuli with Hidden Reference and Anchor. The MUSHRA is a listening test designed to compare two or more audio samples with respect to perceived fidelity. In the MUSHRA test, a human listener is provided with the reference sample (which might be a training sample performed by a human actor, and is labelled as such), test samples, a hidden version of the reference, and one or more anchors (anchors are low pass filtered versions of the reference). The human listener listens to the different samples and assigns a score to each (out of 0-100 scale). Generally, the human listener would assign a score of at least 90 to the hidden version of the reference. The score for the test samples would depend upon how their fidelity to with respect to the reference is perceived by the human listener. The MUSHRA test is generally performed using several human listeners and an average score for each sample is obtained. The average score from the MUSHRA test (also referred to as the MUSHRA score) is then the performance metric. In an example, a MUSHRA score greater than 60 indicates that the model performs well.

Yet alternatively, the performance metric is a transcription metric. The transcription metric is designed to measure the intelligibility of the trained model. Test sentences are prepared and inputted into the trained model that is being tested, these sentences are then synthesised into their corresponding speech using the trained model. The resulting audio/-speech outputs of the model for these test sentences are then passed through a speech-to-text (STT) system. The text resulting from this inference is then converted into its representative series of phonemes, with punctuation removed. The outputted series of phonemes is then compared, on a sentence-by-sentence basis, to the series of phonemes representing the original input text. If this series of phonemes exactly matches the series of phonemes represented by the original input text, then that specific sentence is assigned a perfect score of 0.0. In this embodiment, the "distance" between the input phoneme string and the output phoneme string is measured using the Levenshtein distance; the Levenshtein distance corresponds to the total number of single character edits (insertions, deletions or substitutions) that are required to convert one string to the other. Alternative methods of measuring the differences and hence "distance" between the input and output phoneme string can be used. STT systems are not perfect; in order to ensure the errors being measured by the transcription metric correspond to those produced by the trained model being tested and not the STT system itself, multiple STT systems of differing quality may be used. Sentences with high transcription errors for all STT systems are more likely to contain genuine intelligibility errors caused by the TTS model than those for which only some STT systems give high transcription errors.

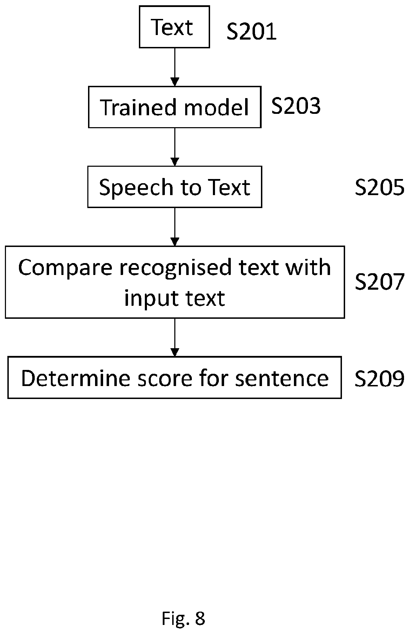

Figure 8 shows flowchart delineating the steps involved in computing the transcription metric. The first step receives text in step S201. The sentence is input into the trained model in step S203. The trained model produces an audio output as explained above. This audio output is then provided through recognition speech to text (STT) system in step S205.

In an embodiment, the STT system comprises an acoustic model that converts speech signals into acoustic units in the absence of a language model. In another embodiment, the STT system also comprises a language model. Additionally and optionally, multiple STT models are used and the result is averaged. The output series of phonemes from the STT in step S205 is then compared with the input series of phonemes S201 in step S207. This comparison can be a direct comparison of the acoustic units or phonemes derived from the input text with the output of the STT system. From this, judgement can be made as to whether the output of the trained model can be accurately understood by the STT. If the input series of phonemes exactly matches the output series of phonemes, then it receives a perfect score of 0.0. The distance between the two series of phonemes is the Levenshtein distance as described earlier. This Levenshtein distance/score is calculated on a sentence-by-sentence basis in step S209. Furthermore, a combined score for the test sentences is calculated by averaging the transcription metric score of all the test sentences. The combined score obtained in S209 is then used as a performance metric for the trained model. For example, when the combined score (the averaged Levenshtein distance) is less than or equal to 1, the trained model is considered to perform well. An averaged Levenshtein distance of less than or equal to 1 corresponds to only one insertion, deletion, or substitution required to make the transcriptions match up to the test sentences on average.

Yet alternatively, the performance metric comprises an attention score. Here, the attention weights of the attention mechanism of the trained model are used. From the attention weights, an attention score can be calculated and used as an indication of the quality of the performance of the attention mechanism and thus model quality. The attention weights is a matrix of coefficients that indicate the strength of the links between the input and output tokens, alternatively this can be thought of as representing the influence that the input tokens have over the output tokens. The input tokens/states may be a sequence of linguistic units (such as characters or phonemes) and the output tokens/states may be a sequence of acoustic units, specifically mel spectrogram frames, that are concatenated together to form the generated speech audio.

The attention mechanism is described above in relation to Figure 2. The input tokens/states correspond to the output of the encoder 31, which comprises a non-linear function that can be, but is not limited to, a recurrent neural network and takes the text sentence as input. The output tokens/states are the result of the decoder 35, which can be a recurrent neural network, and uses the alignment shown by the attention weights to decide which portions of the input states to focus on to produce a given output spectrogram frame.

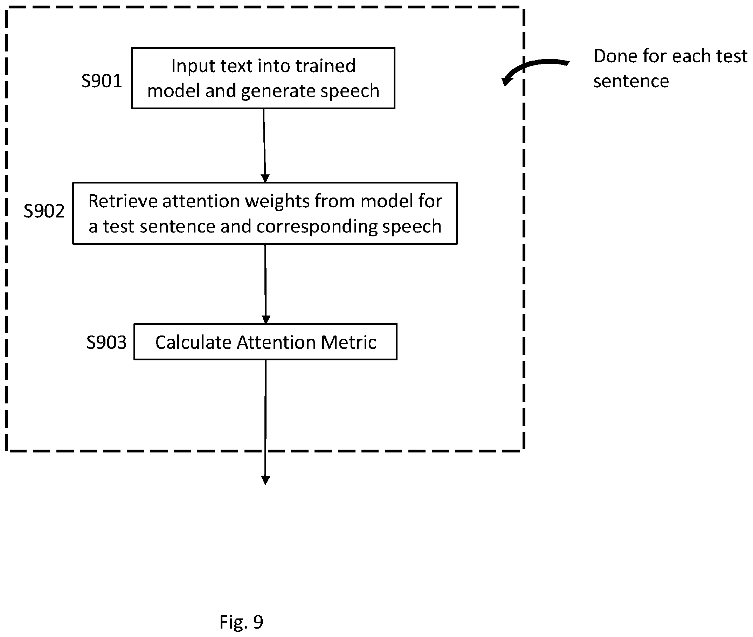

Figure 9 shows a flowchart delineating the steps involved in using the attention weights to calculate an attention metric/score as a means of judging model quality. In step S901, a set of test sentences is inputted into the trained model. During inference, each test sentence is passed through the model in sequence, one at a time.

In step S902, the attention weights are retrieved from the trained model for the current test sentence, together with its corresponding generated speech. This matrix of weights shows the strength of the connections between the input tokens (current test sentence broken down into linguistic units) and the output tokens (corresponding generated speech broken down into the spectrogram frames).

In step S903, the attention metric/score is calculated using the attention weights pulled from the model. In this embodiment, there are two metrics/scores that can be calculated from the attention mechanism: the 'confidence' or the 'coverage deviation'.

The first attention metric in this embodiment consists of measuring the confidence of the attention mechanism over time. This is a measure of how focused the attention is at each step of synthesis. If, during a step of the synthesis, the attention is focused entirely on one input token (linguistic unit) then this is considered maximum "confidence" and signifies a good model. If the attention is focused on all the input tokens equally then this is considered minimum "confidence". Whether the attention is "focused" or not can be derived from the attention weights matrix. For a focused attention, a large weighting value is observed between one particular output token (mel frame) and one particular input token (linguistic unit), with small and negligible values between that same output token and the other input tokens. Conversely, for a scattered or unfocused attention, one particular output token would share multiple small weight values with many of the input tokens, in which not one of the weighting values especially dominates the others.

In an embodiment, the attention confidence metric is measured numerically by observing the alignment, $\alpha_t$, at decoder step $t$, which is a vector whose length is equal to the number of encoder outputs, $I$, (number of phonemes in the sentence) and whose sum is equal to 1. If $\alpha_{ti}$ represents the $i$th element of this vector, i.e. the alignment with respect to encoder output, then the confidence is calculated using a representation of the entropy according to

$$-\frac{1}{I} \sum_i \alpha_{ti} \log \alpha_{ti}.$$

Equation (1)

Here a value of 0.0 represents the maximum confidence and 1.0 minimum confidence. To obtain a value for the whole sentence, it is necessary to take the sum over all the decoder steps t and divide by the length of the sentence to get the average attention confidence score, or alternatively take the worst case, i.e. largest value. It is possible to use this metric to find periods during the sentence when the confidence is extremely low and use this to find possible errors in the output.

The latter metric, coverage deviation, looks at how long each input token is attended to during synthesis. Here, an input token being 'attended to' by an output token during synthesis means the computation of an output token (acoustic units/mel spectrograms) is influenced by that input token. An output token attending to an input token will show itself as a weighting value close to one within the entry of the attention matrix corresponding to those two tokens. Coverage deviation simultaneously punishes the output token for attending too little, and for attending too much to the linguistic unit input tokens over the course of synthesis. If a particular input token is not attended to at all during synthesis, this may correspond to a missing phoneme or word; if it is attended to for a very long time, it may correspond to a slur or repeated syllable/sound.

In an embodiment, the coverage deviation is measured numerically by observing the attention matrix weightings, and summing over the decoder steps. This results in an attention vector, $\beta$, whose elements, $\beta_i$, represent the total attention for linguistic unit input token $i$ during the synthesis. There are various methods for analysing this attention vector to look for errors and to produce metrics for judging model quality. For example, if the average total attention for all encoder steps, $\overline{\beta}$, is known, deviations from this average can be found by using a coverage deviation penalty such as

$$\log(1 + (\bar{\beta} - \beta_i)^2).$$

Equation (2)

Here, if $\beta_i = \overline{\beta}$ then then the metric scores 0 and represents "perfect" coverage. If, however, $\beta_i$ is greater or smaller than $\overline{\beta}$ then the metric score is a positive value that increases on a logarithmic scale with larger deviations from the average total alignment.

If the particular phoneme that input token $i$ represents is known, then different values of the perfect total attention for each encoder, i.e. $\overline{\beta}$, can be used to get a more accurate measure. The perfect average coverage for a given phoneme may also depend on the speech rate of the actor, detailed analysis of a particular actor's speech rate can be used to improve the values of $\overline{\beta}$ further to get more accurate measures. From the above, a score can be derived for each sentence using Equation (1) or Equation (2).

Further, to use the attention score as a performance metric for the trained model, the scores each test sentences are averaged across the plurality of test sentences and these are then compared with a threshold. For example: when the attention score is based on attention confidence (Equation 1), an average score below 0.1 indicates that the trained model performs well; when the attention score is based on coverage deviation (Equation 2), an average score below 1.0 indicates that the trained model performs well.

Yet alternatively, the performance metric comprises a metric termed a robustness metric. The robustness metric is based on the presence or absence of a stop token. The robustness is designed to determine the probability that a trained Tacotron model will reach the synthesis length limit rather than end in the correct manner, which is to produce a stop-token. A stop-token is a command, issued to the model during active synthesis that instructs the model to end synthesis. A stop-token should be issued when the model is confident that it has reached the end of the sentence and thus speech synthesis can end correctly. Without the issue of a stop-token, synthesis would continue, generating "gibberish" speech that does not correspond to the inputted text sentence. The failure for the synthesis to end correctly may be caused by a variety of different errors, including a poorly trained stop-token prediction network, long silences or repeating syllables and unnatural/incorrect speech rates.

The stop-token is a (typically single layer) neural network with a sigmoid activation function. It receives an input vector, $\upsilon_s$, which in the Tacotron model is a concatenation of the context vector and the hidden state of the decoder LSTM. Let $W_s$ be the weights matrix of a single later stop-token network. If the hidden state of the LSTM is of dimension $N_L$ and the dimension of the context vector is $N_C$ then the dimension of the projection layer weight matrix, $W_S$, is:

$$(N_L + N_C) \times 1$$

and the output of the layer is computed according to,

$$\sigma(W_s \cdot \boldsymbol{\upsilon_s} + b_s),$$

where $\sigma$ is the sigmoid function and the rest of the equation equates to a linear transformation that ultimately projects the concatenated layers down to a scalar. Since the final dimension of the weights vector is 1, the result of $W_S \cdot \upsilon_S$ is a scalar value and therefore, due to the sigmoid activation function, the output of this layer is a scalar value between 0 and 1. This value is the stop-token and represents the probability that inference has reached the end of the sentence. A threshold is chosen, such that if the stop-token is above this threshold then inference ceases. This is the correct way for synthesis to end. If, however, this threshold is never reached, then synthesis ends by reaching the maximum allowed number of decoder steps. It is this failure that the robustness check measures.

To compute the robustness metric, the process takes a trained model and synthesises a large number, typically $N_S = 10000$ test sentences, and counts the number of sentences $N_F$ that end inference by reaching the maximum allowed number of decoder steps, i.e. fail to produce a stop token. The robustness score is then simply the ratio of these two numbers, $N_F/N_S$. The test sentences are chosen to be sufficiently short such that, if the sentence were rendered correctly, the model would not reach the maximum allowed number of decoder steps.

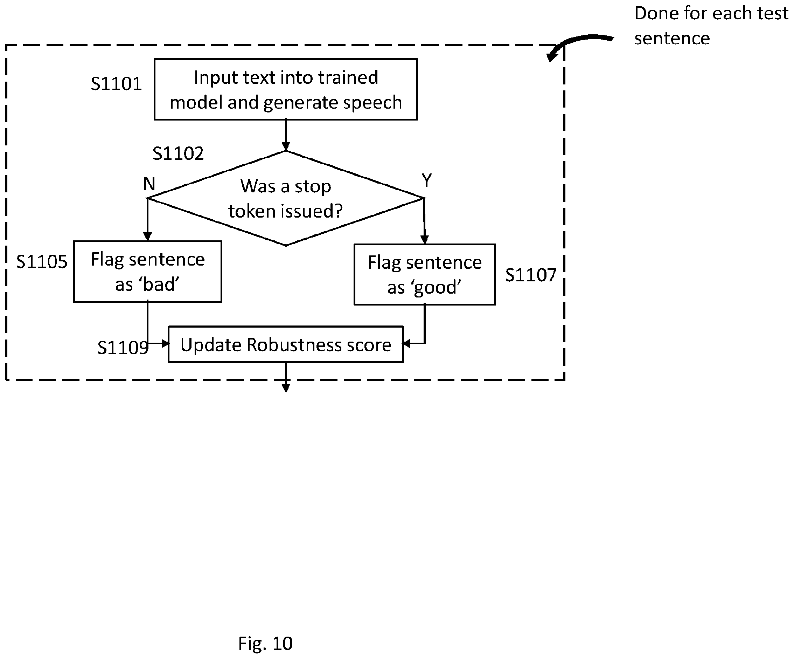

Stop tokens may be used to assess the quality of the synthesis, that is, whether a trained model performs well enough. Figure 10 shows a flowchart delineating the steps involved in utilising robustness and a stop-token metric as a means of judging model quality. Initially, in step S1101, the test sentences are inputted into the trained model one at a time.

In step S1102 it is then determined whether during the sentence's inference a stop token was issued, in other words, whether the gate confidence ever exceeded the given threshold. If a stop token was issued, implying that the generated speech is of good quality and ended appropriately, then that sentence is flagged as 'good' in step S1107. Conversely, if a stop token was never issued before the hard limit/fixed duration, implying the presence of 'gibberish speech 'at the end of the generated audio, then the sentence is flagged as 'bad' in step S1105. In step S1109, the robustness score is updated based upon the new 'good 'or 'bad' sentence.

Further, to use the robustness metric as a performance metric for the trained model, once all of the test sentences have passed through inference, the final robustness score is obtained as number of bad sentences ($N_F$) out of the total number of sentences ($N_S$). If the robustness metric lies below a threshold value of 0.001 or 0.1%, such that only 1 in 1000 renders fail to produce a stop token, then the trained model is considered to perform well.

Yet alternatively, the performance metric comprises two or more of the previously described metrics in combination. The previously described metrics comprise validation loss, speech pattern accuracy as perceived by human listeners, MOS, MUSHRA, transcription metric, attention score and/or robustness score. When two or more metrics are used in combination, the metrics are obtained individually as explained above.

In one example, if all of the two of more metrics meet their respective thresholds, then performance metric is assigned a value representing a 'good' model and the model is considered to perform well enough.

In another example, the two or more metrics are combined into a single aggregate score for each sentence. A unique threshold is used for each separate metric, and then use a simple voting system to aggregate the metrics. The voting system consists of allocating a sentence a score of 1 if they cross the threshold of a metric (fail), and 0 if they don't (pass). This is done for each metric separately so that each sentence has a total score that essentially represents the number of metrics that sentence failed. For example, if the metrics being considered are the transcription, attention, and robustness metrics disclosed previously, then each sentence will have a score ranging from 3 (failed all metrics) to 0 (passed all metrics). Further, to use the aggregate score as a performance metric for the trained model, the score are averaged over all test sentences, and, for example, if the averaged aggregate score is 1 or less, then the model is considered to perform well.

Figure 11 shows a schematic illustration of the obtaining of intermediate sub-datasets. Figure 11 shows a human 800 speaking into a microphone 803 to provide audio samples. In an embodiment, a professional condenser microphone is used in an acoustically treated studio. However, other types of microphone could be used. The human may be referred to as an actor. The actor reads a text script and records the corresponding audio. The text script and the recorded audio eventually become the text and corresponding audio of the intermediate sub-datasets. In a non-limiting embodiment, the actor is instructed to read the text script with increasingly distinct speech patterns. For example, when the speech pattern exhibits the attribute of emotion and in particular sadness, the actor 800 may at the start of the recording read the text in a style that conveys mild sadness, and gradually increase the level of sadness as the reading progresses such that at the end of the reading, the recording conveys extreme sadness (e.g. sobbing or crying). Therefore, for each script, the actor records all levels for an emotion. The script may contain sentences and phrases from one particular domain. In S801, the recorded audio is divided into multiple segments together with their corresponding text portion. In one example, in S801, the recorded audio is divided into a number of segments. In one example, the number of segments corresponds to the number of intermediate sub-datasets, and the recorded audio is divided over its length into a corresponding number of segments of the same duration. Alternatively, the segments correspond to sentences of the script.

In S802, a human based listening test is performed on each audio segment and each audio segment and its corresponding text is allocated into one of the intermediate sub-datasets 101, 102, 103, up to 10N. Optionally, S802 comprises a mean opinion score test as described above in relation to Figure 6 in order to determine in which intermediate sub-dataset an audio segment and its corresponding text should be allocated to.

Additionally and optionally, the script comprises repetitions of the same sentence or phrase both at different positions of the script. For example, when a script comprises the phrase "It is not here" at different positions of the script; early segments corresponding to this phrase may sound mildly sad and would, after S802, be placed in e.g. a low sub-dataset such as 101 or 102, while a later segment corresponding to the same phrase may sound very sad and would, after S802, be placed in e.g. a high sub-dataset such as 103 or 10N.

In the above in relation to Figure 11, the actor 800 reads a text script with increasing levels of emotion (sadness). However, it will be understood that alternative reading orders may equally be used. For example, the actor 800 may start with very sad recordings and move towards more neutral sounding recordings. Yet alternatively, the actor may read a script entirely using one level of emotion. In this case, after S802, all the samples would be placed in the same or neighbouring sub-datasets.

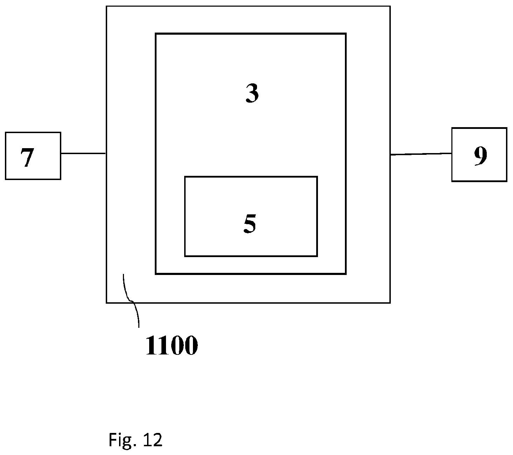

Figure 12 shows a schematic illustration of a text-to-speech (TTS) system according to an embodiment.

The TTS system 1100 comprises a processor 3 and a computer program 5 stored in a non-volatile memory. The TTS system 1100 takes as input a text input 7. The text input 7 may be a text file and/or information in the form of text. The computer program 5 stored in the non-volatile memory can be accessed by the processor 3 so that the processor 3 executes the computer program 5. The processor 3 may comprise logic circuitry that responds to and processes the computer program instructions. The TTS system 1100 provides as output a speech output 9. The speech output 9 may be an audio file of the synthesised speech and/or information that enables generation of speech.

The text input 7 may be obtained from an external storage medium, a communication network or from hardware such as a keyboard or other user input device (not shown). The output 9 may be provided to an external storage medium, a communication network, or to hardware such as a loudspeaker (not shown).

In an example, the TTS system 1100 may be implemented on a cloud computing system, which transmits and receives data. Although a single processor 3 is shown in Figure 9, the system may comprise two or more remotely located processors configured to perform different parts of the processing and transmit data between them.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made.

**Claims**

1. A text-to-speech synthesis method comprising:

   receiving text;
   inputting the received text in a synthesiser, wherein the synthesiser comprises a prediction network that is configured to convert the received text into speech data having a speech attribute, wherein the speech attribute comprises emotion, intention, projection, pace, and/or accent; and
   outputting said speech data,
   wherein the method comprises pre-training the prediction network by:

   obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
   training a first model using the first sub-dataset until a performance metric reaches a first predetermined value;
   training a second model by further training the first model using the second sub-dataset until the performance metric reaches a second predetermined value; and
   selecting one of the trained models as the prediction network.

2. A method according to claim 1, wherein the pre-training of the prediction network further comprises refreshing the second model, wherein refreshing the second model comprises:
   further training the second model using the first sub-dataset until the performance metric reaches a third predetermined value.

3. A method according to claim 1 or 2, wherein the performance metric comprises one or more of a validation loss, a speech pattern accuracy test, a mean opinion score (MOS), a MUSHRA score, a transcription metric, an attention score, and a robustness score.

4. A method according to claim 3, wherein, when the performance metric is the validation loss, the first predetermined value is less than the second predetermined value, preferably wherein the second predetermined value is 0.6 or less.

5. A method according to claim 1 or 2, wherein when the performance metric is the transcription metric, the second predetermined value is 1 or less.

6. A text-to-speech synthesis method comprising:

   receiving text;
   inputting the received text in a synthesiser, wherein the synthesiser comprises a prediction network that is configured to convert the received text into speech data having a speech attribute, wherein the speech attribute comprises emotion, intention, projection, pace, and/or accent; and
   outputting said speech data,
   wherein the method comprises pre-training the prediction network by:

   obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
   combining the first sub-dataset and the second sub-dataset into a combined dataset, wherein the combined dataset comprises audio samples and corresponding text from the first sub-dataset and the second sub-dataset;
   training a first model using the combined dataset;

training a second model by further training the first model using the second sub-dataset; and
selecting one of the trained models as the prediction network.

7. A method according to claim 6, wherein the obtaining of the prediction network further comprises refreshing the second model, wherein refreshing the second model comprises:
further training the second model using the combined dataset, preferably wherein refreshing the second model is performed until a performance metric reaches a predetermined value, preferably wherein the performance metric comprises one or more of a validation loss, a speech pattern accuracy test, a mean opinion score (MOS), a MUSHRA score, a transcription metric, an attention score and a robustness score, preferably wherein, when the performance metric is the validation loss, the predetermined value is 0.6 or less.

8. A method of training a text-to-speech synthesis system that comprises a prediction network configured to convert received text into speech data having a speech attribute, wherein the speech attribute comprises emotion, intention, projection, pace, and/or accent, the method comprising:

obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
training a first model using the first sub-dataset until a performance metric reaches a first predetermined value;
training a second model by further training the first model using the second sub-dataset until the performance metric reaches a second predetermined value; and
selecting one of the trained models as the prediction network.

9. A method of training a text-to-speech synthesis system that comprises a prediction network configured to convert received text into speech data having a speech attribute, wherein the speech attribute comprises emotion, intention, projection, pace, and/or accent, the method comprising:

obtaining a first sub-dataset and a second sub-dataset, wherein the first sub-dataset and the second sub-dataset each comprise audio samples and corresponding text, and the speech attribute of the audio samples of the second sub-dataset is more pronounced than the speech attribute of the audio samples of the first sub-dataset;
combining the first sub-dataset and the second sub-dataset into a combined dataset, wherein the combined dataset comprises audio samples and corresponding text from the first sub-dataset and the second sub-dataset;
training a first model using the combined dataset;
training a second model by further training the first model using the second sub-dataset; and
selecting one of the trained models as the prediction network.

10. A method according to any preceding claim wherein the second sub-dataset comprises fewer samples than the first sub-dataset.

11. A method according to any preceding claim wherein the audio samples of the first sub-dataset and the second sub-dataset are recorded by a human actor.

12. A method according to any preceding claim wherein the first model is pre-trained prior to training with the first sub-dataset or the combined dataset, preferably wherein the first model is pre-trained using a dataset comprising audio samples from one or more human voices.

13. A method according to any preceding claim, wherein the samples of the first sub-dataset and of the second sub-dataset are from the same domain, wherein the domain refers to the topic that the method is applied in.

14. A text-to-speech synthesis system comprising:

a means for receiving text;
a processor configured to input the received text in a synthesiser,
wherein the synthesiser comprises a prediction network that is configured to convert the received text into speech data having a speech attribute, wherein the speech attribute comprises emotion, intention, projection, pace, and/or accents, and
wherein the system is configured to pre-train the prediction network by training the prediction network according to the method of claims 8 or 9; and

an output means for outputting said speech data.

15. A carrier medium comprising computer readable code configured to cause a computer to perform the methods of any of claims 1 to 13.

**Patentansprüche**

1. Sprachausgabeverfahren, das Folgendes umfasst:

   Empfangen von Text;
   Eingeben des empfangenen Texts in einen Synthetisierer, wobei der Synthetisierer ein Vorhersagenetz umfasst, das konfiguriert ist, den empfangenen Text in Sprachdaten umzusetzen, die ein Sprachmerkmal aufweisen, und das Sprachmerkmal eine Emotion, eine Absicht, eine Projektion, ein Tempo und/oder eine Betonung umfasst; und
   Ausgeben der Sprachdaten,
   wobei das Verfahren ein Vortrainieren des Vorhersagenetzes durch Folgendes umfasst:

   Erhalten eines ersten Unterdatensatzes und eines zweiten Unterdatensatzes, wobei der erste Unterdatensatz und der zweite Unterdatensatz jeweils Audioproben und einen entsprechenden Text umfassen und das Sprachmerkmal der Audioproben des zweiten Unterdatensatzes stärker ausgeprägt ist als das Sprachmerkmal der Audioproben des ersten Unterdatensatzes;
   Trainieren eines ersten Modells unter Verwendung des ersten Unterdatensatzes, bis eine Leistungsmetrik einen ersten vorgegebenen Wert erreicht;
   Trainieren eines zweiten Modells durch weiteres Trainieren des ersten Modells unter Verwendung des zweiten Unterdatensatzes, bis die Leistungsmetrik einen zweiten vorgegebenen Wert erreicht; und
   Wählen eines der trainierten Modelle als das Vorhersagenetz.

2. Verfahren nach Anspruch 1, wobei das Vortrainieren des Vorhersagenetzes ferner ein Aktualisieren des zweiten Modells umfasst und das Aktualisieren des zweiten Modells Folgendes umfasst:
   weiteres Trainieren des zweiten Modells unter Verwendung des ersten Unterdatensatzes, bis die Leistungsmetrik einen dritten vorgegebenen Wert erreicht.

3. Verfahren nach Anspruch 1 oder 2, wobei die Leistungsmetrik einen Validierungsverlust und/oder eine Sprachmustergenauigkeitsprüfung und/oder eine durchschnittliche Meinungsbewertung (MOS) und/oder eine MUSHRA-Bewertung und/oder eine Transkriptionsmetrik und/oder eine Aufmerksamkeitsbewertung und/oder eine Robustheitsbewertung umfasst.

4. Verfahren nach Anspruch 3, wobei dann, wenn die Leistungsmetrik der Validierungsverlust ist, der erste vorgegebene ein kleinerer Wert als der zweite vorgegebene Wert ist, wobei bevorzugt der zweite vorgegebene Wert 0,6 oder weniger ist.

5. Verfahren nach Anspruch 1 oder 2, wobei dann, wenn die Leistungsmetrik die Transkriptionsmetrik ist, der zweite vorgegebene Wert 1 oder weniger ist.

6. Sprachausgabeverfahren, das Folgendes umfasst:

   Empfangen von Text;
   Eingeben des empfangenen Texts in einen Synthetisierer, wobei der Synthetisierer ein Vorhersagenetz umfasst, das konfiguriert ist, den empfangenen Text in Sprachdaten umzusetzen, die ein Sprachmerkmal aufweisen, und das Sprachmerkmal eine Emotion, eine Absicht, eine Projektion, ein Tempo und/oder eine Betonung umfasst; und
   Ausgeben der Sprachdaten,
   wobei das Verfahren ein Vortrainieren des Vorhersagenetzes durch Folgendes umfasst:

   Erhalten eines ersten Unterdatensatzes und eines zweiten Unterdatensatzes, wobei der erste Unterdatensatz und der zweite Unterdatensatz jeweils Audioproben und einen entsprechenden Text umfassen und das Sprachmerkmal der Audioproben des zweiten Unterdatensatzes stärker ausgeprägt ist als das Sprachmerkmal der Audioproben des ersten Unterdatensatzes;
Kombinieren des ersten Unterdatensatzes und des zweiten Unterdatensatzes in einen kombinierten Datensatz, wobei der kombinierte Datensatz Audioproben und einen entsprechenden Text aus dem ersten Unterdatensatz und dem zweiten Unterdatensatz umfasst;
Trainieren eines ersten Modells unter Verwendung des kombinierten Datensatzes;
Trainieren eines zweiten Modells durch weiteres Trainieren des ersten Modells unter Verwendung des zweiten Unterdatensatzes und
Wählen eines der trainierten Modelle als das Vorhersagenetz.

7. Verfahren nach Anspruch 6, wobei das Erhalten des Vorhersagenetzes ferner ein Aktualisieren des zweiten Modells umfasst und das Aktualisieren des zweiten Modells Folgendes umfasst:
weiteres Trainieren des zweiten Modells unter Verwendung des kombinierten Datensatzes, wobei bevorzugt das Aktualisieren des zweiten Modells durchgeführt wird, bis eine Leistungsmetrik einen vorgegebenen Wert erreicht, bevorzugt die Leistungsmetrik einen Validierungsverlust und/oder eine Sprachmustergenauigkeitsprüfung und/oder eine durchschnittliche Meinungsbewertung (MOS) und/oder eine MUSHRA-Bewertung und/oder eine Transkriptionsmetrik und/oder eine Aufmerksamkeitsbewertung und/oder eine Robustheitsbewertung umfasst und bevorzugt dann, wenn die Leistungsmetrik der Validierungsverlust ist, der vorgegebene Wert 0,6 oder weniger ist.

8. Verfahren zum Trainieren eines Sprachausgabesystems, das ein Vorhersagenetz umfasst, das konfiguriert ist, einen empfangenen Text in Sprachdaten umzusetzen, die ein Sprachmerkmal aufweisen, wobei das Sprachmerkmal eine Emotion, eine Absicht, eine Projektion, ein Tempo und/oder eine Betonung umfasst und das Verfahren Folgendes umfasst:

Erhalten eines ersten Unterdatensatzes und eines zweiten Unterdatensatzes, wobei der erste Unterdatensatz und der zweite Unterdatensatz jeweils Audioproben und einen entsprechenden Text umfassen und das Sprachmerkmal der Audioproben des zweiten Unterdatensatzes stärker ausgeprägt ist als das Sprachmerkmal der Audioproben des ersten Unterdatensatzes;
Trainieren eines ersten Modells unter Verwendung des ersten Unterdatensatzes, bis eine Leistungsmetrik einen ersten vorgegebenen Wert erreicht;
Trainieren eines zweiten Modells durch weiteres Trainieren des ersten Modells unter Verwendung des zweiten Unterdatensatzes, bis die Leistungsmetrik einen zweiten vorgegebenen Wert erreicht; und
Wählen eines der trainierten Modelle als das Vorhersagenetz.

9. Verfahren zum Trainieren eines Sprachausgabesystems, das ein Vorhersagenetz umfasst, das konfiguriert ist, einen empfangenen Text in Sprachdaten umzusetzen, die ein Sprachmerkmal aufweisen, wobei das Sprachmerkmal eine Emotion, eine Absicht, eine Projektion, ein Tempo und/oder eine Betonung umfasst und das Verfahren Folgendes umfasst:

Erhalten eines ersten Unterdatensatzes und eines zweiten Unterdatensatzes, wobei der erste Unterdatensatz und der zweite Unterdatensatz jeweils Audioproben und einen entsprechenden Text umfassen und das Sprachmerkmal der Audioproben des zweiten Unterdatensatzes stärker ausgeprägt ist als das Sprachmerkmal der Audioproben des ersten Unterdatensatzes;
Kombinieren des ersten Unterdatensatzes und des zweiten Unterdatensatzes in einen kombinierten Datensatz, wobei der kombinierte Datensatz Audioproben und einen entsprechenden Text aus dem ersten Unterdatensatz und dem zweiten Unterdatensatz umfasst;
Trainieren eines ersten Modells unter Verwendung des kombinierten Datensatzes;
Trainieren eines zweiten Modells durch weiteres Trainieren des ersten Modells unter Verwendung des zweiten Unterdatensatzes und
Wählen eines der trainierten Modelle als das Vorhersagenetz.

10. Verfahren nach einem vorhergehenden Anspruch, wobei der zweite Unterdatensatz weniger Proben als der erste Unterdatensatz umfasst.

11. Verfahren nach einem vorhergehenden Anspruch, wobei die Audioproben des ersten Unterdatensatzes und des zweiten Unterdatensatzes durch einen menschlichen Darsteller aufgezeichnet werden.

12. Verfahren nach einem vorhergehenden Anspruch, wobei das erste Modell vor dem Training mit dem ersten Unterdatensatz oder dem kombinierten Datensatz vortrainiert wird und bevorzugt das erste Modell unter Verwendung eines Datensatzes vortrainiert wird, der Audioproben von einer oder mehreren menschlichen Stimmen umfasst.

**13.** Verfahren nach einem vorhergehenden Anspruch, wobei die Proben des ersten Unterdatensatzes und des zweiten Unterdatensatzes aus derselben Domäne sind und die Domäne sich auf das Thema bezieht, in dem das Verfahren eingesetzt wird.

**14.** Sprachausgabesystem, das Folgendes umfasst:

ein Mittel zum Empfangen von Text;
einen Prozessor, der konfiguriert ist, den empfangenen Text in einen Synthetisierer einzugeben,
wobei der Synthetisierer ein Vorhersagenetz umfasst, das konfiguriert ist, den empfangenen Text in Sprachdaten umzusetzen, die ein Sprachmerkmal aufweisen, wobei das Sprachmerkmal eine Emotion, eine Absicht, eine Projektion, ein Tempo und/oder eine Betonung umfasst, und
das System konfiguriert ist, das Vorhersagenetz durch Trainieren des Vorhersagenetzes gemäß dem Verfahren nach Anspruch 8 oder Anspruch 9 vorzutrainieren; und
ein Ausgabemittel zum Ausgeben der Sprachdaten.

**15.** Trägermedium, das computerlesbaren Code umfasst, der konfiguriert ist, zu verursachen, dass ein Computer die Verfahren nach einem der Ansprüche 1 bis 13 durchführt.

**Revendications**

**1.** Procédé de synthèse vocale comprenant :

la réception d'un texte ;
l'entrée du texte reçu dans un synthétiseur, dans lequel le synthétiseur comprend un réseau de prédiction configuré pour convertir le texte reçu en données vocales présentant un attribut vocal, dans lequel l'attribut vocal comprend une émotion, une intention, une projection, un rythme et/ou un accent ; et
la sortie desdites données vocales,
dans lequel le procédé comprend la préformation du réseau de prédiction par :

l'obtention d'un premier sous-ensemble de données et d'un second sous-ensemble de données, dans lequel le premier sous-ensemble de données et le second sous-ensemble de données comprennent chacun des échantillons audio et du texte correspondant, et l'attribut vocal des échantillons audio du second sous-ensemble de données est plus prononcé que l'attribut vocal des échantillons audio du premier sous-ensemble de données ;
la formation d'un premier modèle à l'aide du premier sous-ensemble de données jusqu'à ce qu'une mesure de performance atteigne une première valeur prédéterminée ;
la formation d'un second modèle par formation complémentaire du premier modèle à l'aide du second sous-ensemble de données jusqu'à ce que la mesure de performance atteigne une deuxième valeur prédéterminée ; et
la sélection de l'un des modèles formés comme réseau de prédiction.

**2.** Procédé selon la revendication 1, dans lequel la préformation du réseau de prédiction comprend en outre le rafraîchissement du second modèle, dans lequel le rafraîchissement du second modèle comprend :
la formation complémentaire du second modèle à l'aide du premier sous-ensemble de données jusqu'à ce que la mesure de performance atteigne une troisième valeur prédéterminée.

**3.** Procédé selon la revendication 1 ou 2, dans lequel la mesure de performance comprend un ou plusieurs éléments parmi une perte de validation, un test de précision de modèle vocal, une note moyenne d'opinion (MOS), une note MUSHRA, une mesure de transcription, un score d'attention et un score de robustesse.

**4.** Procédé selon la revendication 3, dans lequel, lorsque la mesure de performance est la perte de validation, la première valeur prédéterminée est inférieure à la deuxième valeur prédéterminée, de préférence dans lequel la deuxième valeur prédéterminée est inférieure ou égale à 0,6.

**5.** Procédé selon la revendication 1 ou 2, dans lequel lorsque la mesure de performance est la mesure de transcription, la deuxième valeur prédéterminée est inférieure ou égale à 1.

6. Procédé de synthèse vocale comprenant :

la réception d'un texte ;
l'entrée du texte reçu dans un synthétiseur, dans lequel le synthétiseur comprend un réseau de prédiction configuré pour convertir le texte reçu en données vocales présentant un attribut vocal, dans lequel l'attribut vocal comprend une émotion, une intention, une projection, un rythme et/ou un accent ; et
la sortie desdites données vocales,
dans lequel le procédé comprend la préformation du réseau de prédiction par :

l'obtention d'un premier sous-ensemble de données et d'un second sous-ensemble de données, dans lequel le premier sous-ensemble de données et le second sous-ensemble de données comprennent chacun des échantillons audio et du texte correspondant, et l'attribut vocal des échantillons audio du second sous-ensemble de données est plus prononcé que l'attribut vocal des échantillons audio du premier sous-ensemble de données ;
la combinaison du premier sous-ensemble de données et du second sous-ensemble de données en un ensemble de données combiné, dans lequel l'ensemble de données combiné comprend des échantillons audio et du texte correspondant du premier sous-ensemble de données et du second sous-ensemble de données ;
la formation d'un premier modèle à l'aide de l'ensemble de données combiné ;
la formation d'un second modèle par formation complémentaire du premier modèle à l'aide du second sous-ensemble de données ; et
la sélection de l'un des modèles formés comme réseau de prédiction.

7. Procédé selon la revendication 6, dans lequel l'obtention du réseau de prédiction comprend en outre le rafraîchissement du second modèle, dans lequel le rafraîchissement du second modèle comprend :
la formation complémentaire du second modèle à l'aide de l'ensemble de données combiné, de préférence dans lequel le rafraîchissement du second modèle est effectué jusqu'à ce qu'une mesure de performance atteigne une valeur prédéterminée, de préférence dans lequel la mesure de performance comprend un ou plusieurs éléments parmi une perte de validation, un test de précision de modèle vocal, une note moyenne d'opinion (MOS), une note MUSHRA, une mesure de transcription, un score d'attention et un score de robustesse, de préférence dans lequel, lorsque la mesure de performance est la perte de validation, la valeur prédéterminée est inférieure ou égale à 0,6.

8. Procédé de formation d'un système de synthèse vocale qui comprend un réseau de prédiction configuré pour convertir du texte reçu en données vocales présentant un attribut vocal, dans lequel l'attribut vocal comprend une émotion, une intention, une projection, un rythme et/ou un accent, le procédé comprenant :

l'obtention d'un premier sous-ensemble de données et d'un second sous-ensemble de données, dans lequel le premier sous-ensemble de données et le second sous-ensemble de données comprennent chacun des échantillons audio et du texte correspondant, et l'attribut vocal des échantillons audio du second sous-ensemble de données est plus prononcé que l'attribut vocal des échantillons audio du premier sous-ensemble de données ;
la formation d'un premier modèle à l'aide du premier sous-ensemble de données jusqu'à ce qu'une mesure de performance atteigne une première valeur prédéterminée ;
la formation d'un second modèle par formation complémentaire du premier modèle à l'aide du second sous-ensemble de données jusqu'à ce que la mesure de performance atteigne une deuxième valeur prédéterminée ; et
la sélection de l'un des modèles formés comme réseau de prédiction.

9. Procédé de formation d'un système de synthèse vocale qui comprend un réseau de prédiction configuré pour convertir du texte reçu en données vocales présentant un attribut vocal, dans lequel l'attribut vocal comprend une émotion, une intention, une projection, un rythme et/ou un accent, le procédé comprenant :

l'obtention d'un premier sous-ensemble de données et d'un second sous-ensemble de données, dans lequel le premier sous-ensemble de données et le second sous-ensemble de données comprennent chacun des échantillons audio et du texte correspondant, et l'attribut vocal des échantillons audio du second sous-ensemble de données est plus prononcé que l'attribut vocal des échantillons audio du premier sous-ensemble de données ;
la combinaison du premier sous-ensemble de données et du second sous-ensemble de données en un ensemble de données combiné, dans lequel l'ensemble de données combiné comprend des échantillons audio et du texte correspondant du premier sous-ensemble de données et du second sous-ensemble de données ;

la formation d'un premier modèle à l'aide de l'ensemble de données combiné ;

la formation d'un second modèle par formation complémentaire du premier modèle à l'aide du second sous-ensemble de données ; et

la sélection de l'un des modèles formés comme réseau de prédiction.

10. Procédé selon une quelconque revendication précédente, dans lequel le second sous-ensemble de données comprend moins d'échantillons que le premier sous-ensemble de données.

11. Procédé selon une quelconque revendication précédente, dans lequel les échantillons audio du premier sous-ensemble de données et du second sous-ensemble de données sont enregistrés par un acteur humain.

12. Procédé selon une quelconque revendication précédente dans lequel le premier modèle est préformé avant la formation avec le premier sous-ensemble de données ou l'ensemble de données combiné, de préférence dans lequel le premier modèle est préformé à l'aide d'un ensemble de données comprenant des échantillons audio d'une ou plusieurs voix humaines.

13. Procédé selon une quelconque revendication précédente, dans lequel les échantillons du premier sous-ensemble de données et du second sous-ensemble de données proviennent du même domaine, dans lequel le domaine fait référence au thème auquel est appliqué le procédé.

14. Système de synthèse vocale comprenant :

un moyen de réception de texte ;

un processeur configuré pour entrer le texte reçu dans un synthétiseur,

dans lequel le synthétiseur comprend un réseau de prédiction qui est configuré pour convertir le texte reçu en données vocales présentant un attribut vocal, dans lequel l'attribut vocal comprend une émotion, une intention, une projection, un rythme et/ou des accents, et

dans lequel le système est configuré pour préformer le réseau de prédiction en formant le réseau de prédiction selon le procédé des revendications 8 ou 9 ; et

un moyen de sortie pour délivrer en sortie lesdites données vocales.

15. Support comprenant un code lisible par ordinateur configuré pour amener un ordinateur à exécuter les procédés selon l'une quelconque des revendications 1 à 13.

Fig. 1

EP 4 205 106 B1

Fig. 2

Fig. 3 (a)

Fig. 3 (b)

Fig. 3 (c)

EP 4 205 106 B1

Fig. 4

Fig. 5 (a)

Fig. 5 (b)

Fig. 6

S101 — Obtain sub-datasets

S103 — Combine sub-datasets

S105 — Train Base Model

S107 — Train First Model

S109 — Train Second Model

S111 — Train Third Model

S200 — Refresh

S112 — Train Fourth Model

(a)

Validation loss

Training time/steps

(b)

S111    S200    S112

Validation loss

Training time/steps

(c)

S111    S112

Fig. 7

EP 4 205 106 B1

EP 4 205 106 B1

```
┌──────┐
│ Text │  S201
└──────┘
    │
    ▼
┌───────────────┐
│ Trained model │  S203
└───────────────┘
    │
    ▼
┌────────────────┐
│ Speech to Text │  S205
└────────────────┘
    │
    ▼
┌──────────────────────────┐
│ Compare recognised text  │
│ with input text          │  S207
└──────────────────────────┘
    │
    ▼
┌──────────────────────────┐
│ Determine score for      │
│ sentence                 │  S209
└──────────────────────────┘
```

Fig. 8

S901 — Input text into trained model and generate speech

Done for each test sentence

S902 — Retrieve attention weights from model for a test sentence and corresponding speech

S903 — Calculate Attention Metric

Fig. 9

Fig. 10

Fig. 11

EP 4 205 106 B1

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020024582 A1

**Non-patent literature cited in the description**

- Natural tts synthesis by conditioning wavenet on mel spectrogram predictions. **SHEN et al.** 2018 IEEE International Conference on Acoustics, Speech and Signal Processing (ICASSP). IEEE, 2018

- Waveglow: A flow-based generative network for speech synthesis. **PRENGER et al.** ICASSP 2019-2019 IEEE International Conference on Acoustics, Speech and Signal Processing (ICASSP). IEEE, 2019